(19) Europäisches Patentamt

European Patent Office

Office européen des brevets

(11) **EP 1 321 842 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(51) Int Cl.:
*G05D 16/20* (2006.01)    *G05D 7/06* (2006.01)
*F24D 19/10* (2006.01)

(21) Anmeldenummer: **02028445.1**

(22) Anmeldetag: **19.12.2002**

(54) **Hydraulische Anlage**

Hydraulic system

Système hydraulique

(84) Benannte Vertragsstaaten:
**AT BE BG CH CY CZ DE DK EE ES FI FR GB GR IE IT LI LU MC NL PT SE SI SK TR**

(30) Priorität: **21.12.2001 DE 10163396**
**07.12.2002 DE 10257657**

(43) Veröffentlichungstag der Anmeldung:
**25.06.2003 Patentblatt 2003/26**

(73) Patentinhaber: **KSB Aktiengesellschaft**
**67227 Frankenthal (DE)**

(72) Erfinder: **Illy, Alois**
**67117 Limburgerhof (DE)**

(56) Entgegenhaltungen:
WO-A-00/57111         DE-A- 4 019 503
DE-A- 4 203 613       US-A- 3 202 208

EP 1 321 842 B1

**Beschreibung**

Die Erfindung betrifft ein Verfahren zur Beeinflussung eines Fluidstromes in einer mit einem Verbraucher versehenen hydraulischen Anlage, wobei mindestens eine in der Anlage angeordnete, in Förderhöhe und/oder Fördermenge veränderbare Pumpe ein Fluid unter Überwindung des Rohmetzwiderstandes umwälzt und eine in der hydraulischen Anlage angeordnete Stellarmatur die Transportleistung des Fluids verändert.

Hydraulische Anlagen der oben genannten Art werden häufig in wärmetechnischen Anlagen der Gebäudetechnik und Industrie eingesetzt, wobei ein Anlagenregler eine physikalische Größe der wärmetechnischen Anlage, z. B. eine Temperatur, regelt und bei Abweichungen vom Sollwert ein Signal zur Veränderung des Fluidstromes an das oben definierte System gibt.

In Fluid führenden Anlagen, die gewöhnlich aus Rohrleitungssystemen mit darin integrierten Förderelementen und Stellgeräten in Form von Pumpen und Armaturen sowie Verbrauchern in Form von Wärmetauschern, Heizkörpern, Reaktoren usw. bestehen, ist für das gesamte Regelverhalten das statische und dynamische Verhalten der einzelnen Regelkreisglieder von ausschlaggebender Bedeutung. In vielen Fällen hat ein in der hydraulischen Anlage angeordneter Anlagenregler inklusive Meßumformer eine lineare Kennlinie. Dann ist es optimal, wenn eine innerhalb eines Regelkreises der hydraulischen Anlage Verwendung findende Stellarmatur im Zusammenwirken mit den Anlagenkomponenten Pumpe, Rohrleitungen usw. und dem Verbraucher eine resultierende lineare statische Kennlinie aufweist.

Darüber hinaus gibt es auch Fälle, bei denen die optimale resultierende statische Kennlinie von Stellarmatur, Pumpe, Rohrleitungen und Verbrauchern im Zusammenwirken mit speziellen Anlagenregler-Kennlinien einen nichtlinearen Verlauf aufweisen soll.

Im folgenden wird aus Vereinfachungsgründen vom häufigeren Fall der linearen statischen Kennlinie ausgegangen. Nichtlineare statische Kennlinien können jedoch in analoger Weise betrachtet werden.

In der Fachliteratur wird eine solche resultierende statische Kennlinie von Stellarmatur, Pumpe, Rohrleitungen und Verbrauchern meist als Streckenkennlinie bezeichnet. Deren Definition ist im Fachbuch "Regelungstechnik in der Versorgungstechnik", Verlag C.F. Müller GmbH, Karlsruhe, 1983, auf Seite 203, aufgezeigt.

In üblicher Vorgehensweise werden für Fluid führende Anlagen erwünschte Streckenkennlinien durch die Wahl einer geeigneten Stellarmaturengrundkennlinie und Stellarmaturenautorität erzeugt. Hierbei ist es üblich, durch eine bewußt gewählte Nichtlinearität der Stellarmaturengrundkennlinie, die gegebenenfalls mit Hilfe einer sogenannten Kennlinienelektronik modifiziert werden kann und durch eine relativ hohe Stellarmaturenautorität, im folgenden Autorität genannt, die existierenden Nichtlinearitäten von anderen Komponenten der hydraulischen Anlage zu kompensieren.

Durch die WO 00/57111 ist eine Anlage bekannt, bei der die Reglerkennlinie und die hydraulischen Eigenschaften der Komponenten definiert sind. In der Anlage stellt sich eine Durchflusskennlinie auf Grund der Charakteristik der hydraulischen Komponenten der Anlage, insbesondere der ausgewählten Pumpenregelkennlinie und der Stellarmaturenkennlinie und - autorität sowie der Widerstandskennlinie des Rohrleitungssystems einschließlich Verbraucher, von selbst und individuell ein. Eine solche sich selbst einstellende Durchflusskennlinie entspricht nicht einer regeltechnisch optimalen Durchflusskennlinie.

Bei der DE 40 19 503 A1 wird versucht, einen bei metallisch hartdichtenden Ventilen durch die konstruktive Ausbildung von Ventilkegel und Ventilsitz bedingten vorteilhaften Verlauf einer vorgegebenen Ventilhub/Durchfluss-Kennlinie auch auf weichdichtende Ventile zu übertragen. Die metallisch dichtenden Ventile haben den Nachteil relativ hoher Leckverluste, während dem Vorteil der weichdichtenden Ventile, die geringen Leckverluste, der Nachteil einer zufällig vorhandenen Ventilhub/Durchfluss-Kennlinie entgegensteht. Dieser Kennlinien-Nachteil erfordete eine entsprechende Ansteuerung des Stellventils. In der VDI/VDE-Richtlinie 2173 vom September 1962, DK 621/558 (083.132) wird die Ventilhub/Durchfluss-Kennlinie als Ventilkennlinie bezeichnet. Unter der Ventilkennlinie wird die Abhängigkeit des $k_v$-Wertes vom Hub H verstanden, wobei die kv-Werte in Prozent von $k_{vs}$ und der Hub in Prozent des Nennhubes $H_{100}$ anzugeben ist, um eine einheitliche Darstellung zu erreichen. Unter $k_v$-Wert wird der Durchfluss in $m^3$/h von Wasser bei 5 bis 30 °C verstanden, der bei einem Druckverlust von 1 kp/cm$^2$ durch das Stellventil bei dem jeweiligen Hub H hindurchgeht. Analog setzt die definierte Ventilkennlinie $k_v/k_{vs} = f (H/H_{100})$ Wasser als strömenden Stoff und einen konstanten Druckverlust am Stellventil von 1 kp/cm$^2$ (entsprechend 1 bar) bei allen Ventilstellungen voraus. Diese definierte Bedingung ist jedoch bei der Anwendung eines Stellventils in einer Regelstrecke einer Anlage meist nicht der Fall. Die sich in einer Anlage einstellende Durchflusskennlinie Q = f (H) beschreibt daher etwas ganz anderes.

Bei der DE 40 19 503 A1 wird eine Pumpe in Abhängigkeit von der Vor- und Rücklauftemperatur in der Anlage und die Stellarmatur in Abhängigkeit von der Raumtemperatur gesteuert. Diese jeweils unterschiedlich wirkenden Einflüsse verursachen eine starke Streuung der Anlagen-Durchflusskennlinie. Diese Anlage erfordert daher eine sehr hohe Autorität der Stellventils.

Bedingt durch die Vielzahl der verschiedenen Anlagen, in denen jeweils unterschiedliche hydraulische Verhältnisse und Verbraucherkennlinien vorherrschen, gelingt die Realisierung der erwünschten Streckenkennlinie nur näherungsweise. In der Regel muß daher die Autorität einer Stellarmatur relativ hoch gewählt werden, um angenähert lineare Streckenkennlinien in der Anlage zu erhalten, wobei immer noch Abweichungen von der Regelgüte in Kauf genommen werden müssen.

Eine anschauliches Beispiel zu diesem Problemkreis ist in dem Fachbuch "Regelarmaturen" von Obering. Walter Wagner, Vogel Buchverlag, Würzburg; 1. Auflage 1996, Seite 89, Bild 7.18, anhand von Lufterhitzern dargestellt.

Derartige Anlagen sind nicht energieoptimal, da über die Stellarmatur ein erheblicher Druckverlust abgebaut werden muß. Andererseits verursacht eine zu niedrige Autorität Abweichungen von der Regelgüte und damit eine Verschlechterung des Anlagenwirkungsgrades und Energieverluste. Bei Anlagen, die zum Zwecke der Regelung eines Raumklimas erstellt werden, führt dies zu einer zusätzlichen Verschlechterung des gewünschten Komforts.

Die Erhöhung der Autorität einer Stellarmatur hat eine Vergrößerung des hydraulischen Widerstandes innerhalb einer Anlage zur Folge, wodurch wiederum der Energiebedarf für eine in die Anlage integrierte Pumpe entsprechend stark ansteigt.

Der Erfindung liegt daher das Problem zugrunde, für eine Fluid führende hydraulische Anlage die oben genannten Nachteile zu vermeiden. Weiter soll für eine hydraulische Anlage eine optimierte Durchflußkennlinie erzeugt werden, mit der eine Energieeinsparung, eine Verbesserung der Regelgüte, Erhöhung des Komforts sowie weitere Vorteile erreichbar sind.

Die Lösung dieses Problems sieht vor, daß mit einer als permanenter oder temporärer Bestandteil der hydraulischen Anlage ausgebildeten Elektronikeinheit aus einer erwünschten Streckenkennlinie $S$ und der Verbraucherkennlinie $V$ eine zugehörige Anlagen-Durchflusskennlinie $D$ ermittelt wird und dass mit der Anlagen-Durchflußkennlinie $D$, gebildet aus Wertepaaren von Anlagen-Fluidstrom $Q$ und Stellsignal $Y$ eines Anlagenreglers, oder gebildet aus Wertepaaren von Anlagen-Fluidstrom $Q$ und Drosselstellung $H$ der Stellarmatur, die Elektronikeinheit, eine Pumpenregelung oder eine Regelelektronik für jedes Wertepaar der Anlagen-Durchflusskennlinie $D$ die Förderhöhe $P$ der Pumpe und den Rohmetzwiderstand $p_1 + p_2$ auf einen gleichen Wert einstellt oder einregelt.

Diese Lösung hat den Vorteil der wesentlichen Reduzierung des Energiebedarfes einer solchen Anlage: Damit wird in der Stellarmatur nur noch ein unbedingt notwendiger Widerstand erzeugt bzw. aufrechterhalten. In der Folge reduziert sich der Leistungsbedarf des Pumpenaggregates erheblich. Zusätzlich wird die Regelgüte deutlich verbessert, da Abweichungen von einer Regelgröße, beispielsweise einer Raumtemperatur, minimiert werden. Dies wirkt sich unmittelbar auf den Klimakomfort aus. Als weitere Folge ergeben sich geringere Geräuschemissionen und die Größe eines Pumpenaggregates kann reduziert werden, da nur noch eine geringere Förderhöhe der Pumpe in der hydraulischen Anlage notwendig ist. Dabei kann die Elektronikeinheit einen permanenten oder temporären Bestandteil der hydraulischen Anlage darstellen.

Ausgestaltungen der Erfindung sehen vor, daß durch die Elektronikeinheit ein Regler von mindestens einer in der Anlage angeordneten Pumpe und ein Stellantrieb von einer in der Anlage angeordneten Stellarmatur zu einer regelungstechnischen und/oder steuerungstechnischen Stelleinheit verbunden sind. Oder daß der Rohmetzwiderstand durch Veränderung der Drosselstellung einer Stellarmatur eingestellt bzw. eingeregelt wird.

Nach einer weiteren Ausgestaltung erfolgt die Veränderung der Förderhöhe und/oder der Fördermenge der Pumpe durch Drehzahlveränderung und/oder durch eine Leitschaufelverstellung.

Nach einer anderen Ausgestaltung ist bei einer Drehzahlveränderung, Leitschaufel- und/oder Laufschaufelverstellung die Förderhöhe der Pumpe die Regelgröße.

Auch ist es möglich, daß die Förderhöhenregelung der Pumpe nach dem Prinzip einer konstanten Förderhöhe bei vorgegebenen Sollwert arbeitet.

Nach einer anderen Ausgestaltung ist vorgesehen, daß das Stellsignal des Anlagenreglers- oder Steuergerätes, das Signal der Förderhöhe der Pumpe und das Fluidstromsignal in die Elektronikeinheit permanent eingeleitet werden und die Elektronikeinheit die Sollwerte für die Förderhöhe der Pumpe und die Drosselstellung der Stellarmatur permanent ausgibt.

Nach einer weiteren Ausgestaltung ist vorgesehen, daß das Stellsignal des Anlagenreglers oder- steuergerätes permanent und das Signal für die Förderhöhe der Pumpe und das Fluidstromsignal im Rahmen der Einregulierung der Anlage in die Elektronikeinheit eingeleitet werden und die Elektronikeinheit die Sollwerte für die Förderhöhe der Pumpe und die Drosselstellung der Stellarmatur permanent ausgibt.

Eine weitere Ausgestaltung sieht vor, daß das Signal für die Förderhöhe der Pumpe und das Fluidstromsignal im Rahmen der Einregulierung der Anlage in die Elektronikeinheit eingegeben werden, daß die Elektronikeinheit die Sollwerte für die Förderhöhe der Pumpe und die Drosselstellung der Stellarmatur in Abhängigkeit vom Stellsignal ermittelt und diese Werte im Regler der Pumpe bzw. im Stellantrieb der Stellarmatur gespeichert und beim Betrieb der Anlage permanent ausgegeben werden, wobei das Stellsignal des Anlagenreglers oder Steuergerätes sowohl in den Regler der Pumpe, als auch in den Stellantrieb permanent eingeleitet wird.

Ebenso ist vorgesehen, daß in der Elektronikeinheit eine aus pumpen - und anlagentechnischer Sicht minimal mögliche Förderhöhe der Pumpe in Abhängigkeit vom Fluidstrom vorgewählt wird und daß die Elektronikeinheit die zugehörige Stellarmaturenkennlinie unter Einbeziehung der minimal und maximal zulässigen Kennlinienverläufe der Stellarmatur ermittelt.

Nach einer weiteren Ausgestaltung wird eine aus stellarmaturen- und anlagentechnischer Sicht günstige Stellarmaturenkennlinie vorgewählt und die Elektronikeinheit ermittelt die zugehörige Förderhöhe der Pumpe in Abhängigkeit vom Fluidstrom unter Einbeziehung der pumpentechnischen Möglichkeiten.

Dazu sind in der Elektronikeinheit eine Vielzahl anlagentechnisch relevanter Strecken- und Verbraucherkennlinien abgelegt und können anlagenspezifisch ausgewählt bzw. modifiziert werden. Ebenso sind in der Elektronikeinheit eine Vielzahl pumpentechnisch relevanter Förderhöhenkennlinien abgelegt und werden pumpenspezifisch ausgewählt bzw. modifiziert. Oder in der Elektronikeinheit sind eine Vielzahl armaturentechnisch relevanter Stellarmaturenkennlinien abgelegt, die armaturenspezifisch ausgewählt bzw. modifiziert werden. Alternativ dazu sind in der Elektronikeinheit eine Vielzahl technisch relevanter Durchflußkennlinien abgelegt die anlagenspezifisch ausgewählt bzw. modifiziert werden.

Nach einer bevorzugten Ausgestaltung ermittelt die Elektronikeinheit aus der erwünschten Streckenkennlinie und der Verbraucherkennlinie die optimale Durchflußkennlinie aus den Koordinaten der Strecken- bzw. Verbraucherkennlinie nach dem im Prinzip bekannten normalaxonometrischen Verfahren.

Auch ist vorgesehen, daß die optimale Durchflußkennlinie als Funktion des Fluidstromes in Abhängigkeit vom Stellsignal des Anlagenreglers- oder Steuergerätes gebildet ist. Ebenso kann die optimale Durchflußkennlinie extern gebildet und in die Elektronikeinheit eingegeben werden.

Eine weitere Ausgestaltung sieht vor, daß bei einem Stillstand der Pumpe die Stellarmatur geschlossen wird.

Die Elektronikeinheit ist ganz oder teilweise in die Regelelektronik drehzahlgeregelter Pumpen und/oder den Stellantrieb und/oder den Stellungsregler der Stellarmatur integriert und die Teile der Elektronikeinheit sind durch Daten oder Signale übertragende Verbindungen miteinander verbunden. Ebenso kann die Elektronikeinheit als eigenständige Baueinheit ausgebildet sein, der Stellantrieb der Stellarmatur einen Stellungsregler aufweisen, oder es kann die Pumpe und die Stellarmatur als eine Baueinheit ausgebildet sein. Dazu ist es auch vorteilhaft, wenn Pumpe und Stellarmatur in einem gemeinsamen Gehäuse angeordnet sind.

Die Ausgestaltung nach Anspruch 20 vermeidet die Nachteile üblicher Beimischregelungen, bei denen bei annähernd konstantem Fluidstrom eine Vorlauftemperatur des Fluids zu einem Wärmetauscher durch Beimischung von Rücklauffluid beeinflußt wird. Bei einer solchen Regelung muß im gesamten Leistungsbereich, also auch im während einer Heizperiode weit überwiegend genutzten mittleren Leistungsbereich, immer der gleich hohe Fluidstrom wie bei maximaler Wärmeleistung umgewälzt werden. Bei einer kombinierten Durchfluß-Beimisch-Regelung wird im Teillastbereich weniger Fluid umgewälzt und dadurch wesentlich weniger Energie für die Umwälzung des Fluids benötigt, als bei einer reinen Beimischregelung. Werden zum Beispiel im mittleren Leistungsbereich, der meist einem gewichteten Jahresmittelwert entspricht, nur noch 60% des Fluidstromes umgewälzt, so bedeutet dies eine Senkung des notwendigen Energiebedarfs um ca. 64%. Ursächlich dafür ist der Widerstand des Rohrleitungssystems, der quadratisch mit dem Fluidstrom abnimmt. Infolge der verwendeten linearen Streckenkennlinie kann die Autorität der im Vorlauf oder Rücklauf angeordneten Stellarmatur reduziert werden. Als Folge davon nimmt der Energiebedarf zusätzlich ab und in sehr vielen Fällen kann, bedingt durch die niedrigere Autorität der Stellarmatur, ein kleineres Pumpenaggregat eingesetzt werden. Denn mit der geringeren Autorität der Stellarmatur geht die ursprünglich erforderliche Pumpenförderhöhe zurück. Ein weiterer Vorteil der Realisierung einer linearen Streckenkennlinie liegt in der dadurch bedingten Verbesserung der Regelgüte. Die Abweichungen vom Sollwert einer gewählten Raumtemperatur werden vermindert und damit der Komfort verbessert. Dies spart zusätzlich primäre Energie ein, da die bei herkömmlichen Systemen üblichen höheren Schwankungen im Regelverhalten eine höhere Einstellung eines Sollwertes bedingt haben. Dazu sieht eine weitere Ausgestaltung vor, daß das System mit einer linearisierten Streckenkennlinie $S$ und daraus abgeleiteten Durchflußkennlinie $D$ versehen ist.

Ein Verfahren zur Erzeugung optimalen Streckenkennlinien in hydraulischen Anlagen ist dadurch gekennzeichnet, daß innerhalb einer Elektronikeinheit aus der erwünschten optimalen Streckenkennlinie und der Verbraucherkennlinie die für die Anlage optimale Durchflußkennlinie ermittelt wird, daß die ermittelte optimale oder eine extern vorgegebene Durchflußkennlinie in der Anlage dadurch realisiert wird, daß die Elektronikeinheit aus einer vorgewählten Förderhöhenkennlinie der Pumpe die erforderlichen $kv$-Werte der Stellarmatur oder aus einer vorgewählten Stellarmaturenkennlinie die erforderliche Förderhöhenkennlinie der Pumpe nach dem Prinzip ermittelt, daß für jedes Wertepaar von Stellsignal des Anlagenreglers und Fluidstrom der Durchflußkennlinie die Förderhöhe der Pumpe und der Rohmetzwiderstand gleich sein müssen, daß aus den $kv$-Werten die Drosselstellungen der Stellarmatur mit Hilfe der Grundkennlinie abgeleitet werden und daß die Elektronikeinheit die einander zugeordneten Werte für die Förderhöhe der Pumpe und die Drosselstellung der Stellarmatur als Sollwerte in Abhängigkeit vom Stellsignal des Anlagenreglers an die Pumpenregelung bzw. den Stellantrieb der Stellarmatur leitet.

Ausführungsbeispiele der Erfindung sind in den Zeichnungen dargestellt und werden im folgenden näher beschrieben. Es zeigen die

Fig. 1     eine schematisch dargestellte Anlage, bei der ein Stellsignal und ein Fluidstromsignal in eine Elektronikeinheit eingeleitet werden.

Fig. 2      eine schematisch dargestellte Anlage, bei der nur ein Stellsignal in eine Elektronikeinheit eingeleitet wird.

Fig. 3      eine schematisch dargestellte Anlage, bei der die Elektronikeinheit nur zum Zwecke der Einregulierung der Anlage verwendet wird.

Fig. 4      eine schematische Darstellung der Hauptfunktionen der Elektronikeinheit.

Fig. 5      die Ermittlung der Durchflußkennlinie.

Fig. 6      das Prinzip der Realisierung der Durchflußkennlinie.

Fig. 7      die Ermittlung der Betriebspunktekurve aus vorgewähltem Sollwert der Förderhöhe der Pumpe und Durchflußkennlinie.

Fig. 8      Die Ermittlung der Betriebspunktekurve aus vorgewählter Stellarmaturenkennlinie und Durchflußkennlinie.

Fig. 9      die Ermittlung des Hubes bzw. der Stellarmaturenkennlinie.

Fig. 10     eine schematisch dargestellte Anlage mit einer Durchfluß-Beimisch-Regelung.

Fig. 11     die Ermittlung der Durchflußkennlinie der Anlage von Fig. 10.

Fig. 12     eine schematisch dargestellte Anlage, bei der eine Pumpe mehrere Verbraucher versorgt.

Fig. 13     die Ermittlung der Durchflußkennlinie der Anlage von Fig. 12.

Fig. 14     schematisch vereinfacht einen Ausschnitt einer Heizungsanlage mit Pumpen-Stellarmaturen-Einheiten für jeden Raum.

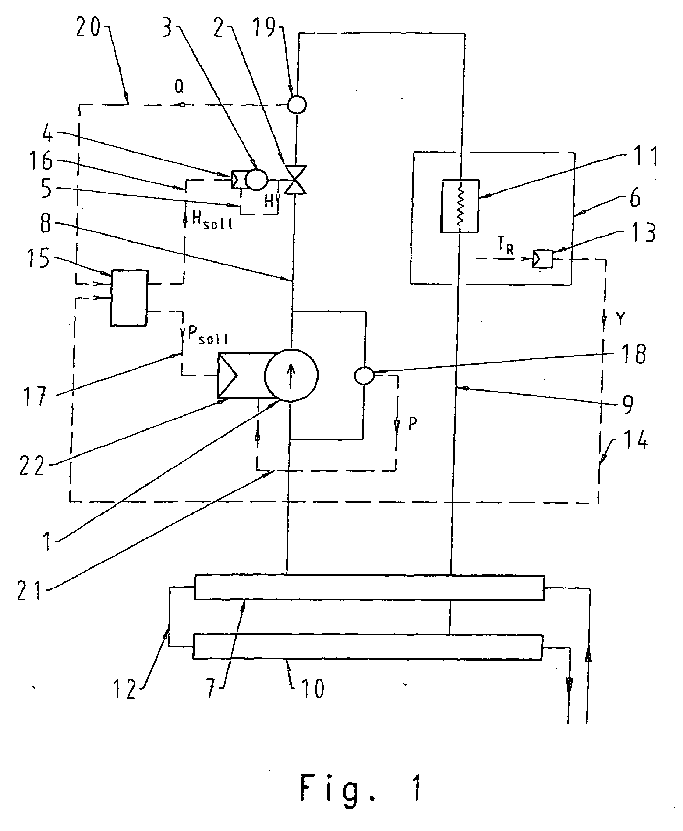

Eine in der Figur 1 schematisch dargestellte Anlage verfügt über ein in der Förderleistung veränderbares Pumpenaggregat 1. In der Darstellung ist dafür ein Symbol für ein Pumpenaggregat mit stufenloser Förderhöhenregelung durch eine Drehzahlveränderung gewählt worden, wobei die Förderhöhe der Pumpe in Abhängigkeit von einem vorgegebenen Sollwert konstant gehalten wird.

Zur Veränderung der Förderleistung kann neben der Drehzahlveränderung auch das Prinzip einer Leitschaufel- oder Laufschaufelverstellung oder Kombinationen davon verwendet werden.

Alternativ dazu kann auch eine Förderhöhenregelung eingesetzt werden, bei der für jeden vorgegebenen Sollwert die Förderhöhe der Pumpe in Abhängigkeit vom Fluidstrom variabel ist.

Eine in der Anlage angeordnete Stellarmatur 2 ist mit einem Stellantrieb 3 versehen. Der Stellantrieb 3 ist mit einer Regelelektronik 4 mit integriertem Stellungsregler ausgerüstet. Der Stellungsregler stellt durch eine Rückführung 5 der Drosselstellung $H$ sicher, daß die tatsächliche Drosselstellung $H$ der Stellarmatur dem Sollwert $H_{soll}$ entspricht. Ein Stellungsregler ist im allgemeinen bei höheren Ansprüchen an die Regelgüte der Anlage sinnvoll. Außerdem ist sein Einsatz auch von der konstruktiven Ausführung der Stellarmatur und von den Betriebsbedingungen abhängig.

Als Beispiel für einen Verbraucher dient hier ein beheizter Raum 6, dessen Raumtemperatur $T_R$ geregelt werden soll.

Die Pumpe 1 fördert ein Fluid aus einem Voriaufverteiler 7 über eine Vorlaufleitung 8 zum Verbraucher 6 und von dort über eine Rücklaufleitung 9 zu einem Rücklaufsammler 10. Mittels eines oder mehrerer Wärmetauscher 11 wird der Verbraucher 6 beheizt oder gekühlt, wodurch das Fluid in seinem Wärmegehalt verändert wird. Vorlaufverteiler 7 und Rücklaufsammler 10 sind untereinander durch eine Leitung 12 verbunden, und haben somit gleiches Druckniveau. Haben Vorlaufverteiler 7 und Rücklaufsammler 10 nicht das gleiche Druckniveau, so muß die Druckdifferenz bei der weiteren Betrachtung in bekannter Weise gesondert berücksichtigt werden, da sie nicht zum Rohrnetzwiderstand der Anlage zählt. An Stelle der Wärmeversorgung über Vorlaufverteiler 7 und Rücklaufsammler 10 kann auch eine Wärmeversorgung mittels eines Heizkessels, Wärmetauschers usw. erfolgen.

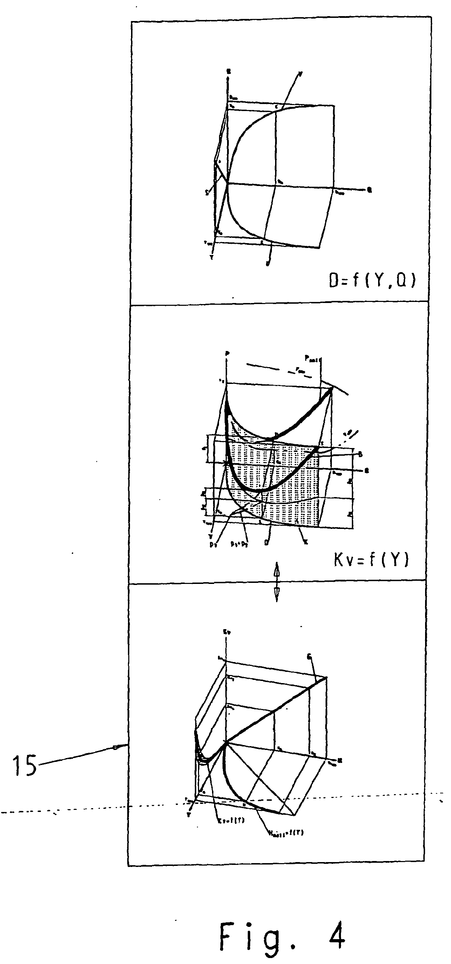

Die Raumtemperatur $T_R$ Raumes 6 wird von einem Anlagenregler 13 mit integrierter Meßwerterfassurig geregelt, der bei Abweichung von einem gewünschten, am Anlagenregler 13 eingestellten Sollwert ein Stellsignal $Y$ mittels der Signalleitung 14 an eine Elektronikeinheit 15 gibt. Die Elektronikeinheit 15 veranlaßt eine Veränderung des durch die Anlage zirkulierenden Fluidstromes $Q$. Dies geschieht durch Veränderung der Drosselstellung $H$ der Stellarmatur 2 und der Förderhöhe $P$ der Pumpe 1 entsprechend der von der Elektronikeinheit 15 ermittelten Sollwerte $H_{soll}$ und $P_{soll}$ auf die in den Figuren 4 bis 8 näher eingegangen wird. $H_{soll}$ wird mittels Signalleitung 16 und $P_{soll}$ mittels Signalleitung 17 übertragen. Ist zum Beispiel die Raumtemperatur $T_R$ des Raumes 6 zu hoch, so wird in die Anlage so eingegriffen, daß weniger Fluid zum Wärmetauscher 11 gefördert wird. Dieses Regelverfahren, bei dem die Anpassung der Wärmeleistung an den tatsächlichen Bedarf durch eine Änderung des Fluidstromes $Q$ erfolgt, wird allgemein als Drosselregelung bezeichnet.

In der Anlage sind weiterhin ein Sensor 18 zur Erfassung der Förderhöhe $P$ der Pumpe 1 und ein Sensor 19 zur Erfassung des Fluidstromes $Q$ integriert. Das Sensorsignal $Q$ wird in die Elektronikeinheit 15 mittels der Signalleitung 20 eingespeist. Das Sensorsignal $P$ wird mittels der Signalleitung 21 in die Pumpenregelung 22 geleitet und veranlaßt dort durch eine Veränderung der Drehzahl die Einstellung der Förderhöhe $P$ der Pumpe 1 auf den Sollwert $P_{soll}$.

Anordnungen nach Fig. 1 sind insbesondere dann sinnvoll, wenn der Rohmetzwiderstandswert ohne Stellarmatur variabel ist. Sie können jedoch auch bei einem konstanten Widerstandsbeiwert eingesetzt werden. Im Falle des variable Widerstandsbeiwertes ist es vorteilhaft, den Fluidstrom $Q$ in die Ermittlung der Sollwerte für die Veränderung der Drosselstellung $H$ der Stellarmatur und der Förderhöhe $P$ der Pumpe permanent einzubeziehen, insbesondere, wenn der Widerstandsbeiwert stark schwankt. Darauf wird im Anschluß an die Beschreibung der Fig. 4 bis 9 nochmals näher eingegangen.

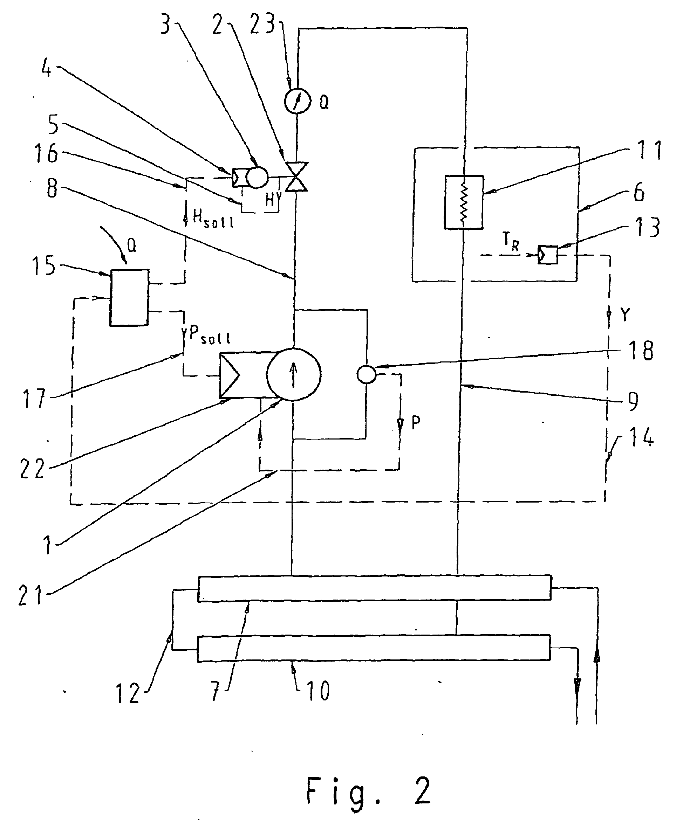

Fig. 2 unterscheidet sich von Fig. 1 nur dadurch, daß der Fluidstrom $Q$ nicht mittels Signalleitung, sondern von Hand in die Elektronikeinheit 15 eingegeben wird. Dies ist bei Anlagen sinnvoll, deren Rohmetzwiderstandsbeiwert ohne Stellarmatur konstant oder annähernd konstant ist. In diesen Fällen wird der Wert des Fluidstromes $Q$ nur zur Einregulierung der Anlage gebraucht. Es ist daher möglich, ein Fluidstrommeßgerät 23 einzusetzen, daß nach dem Einregulieren wieder aus der Anlage entfernt wird. Ein solches Gerät ist z. B. das Ultraschallmeßgerät, daß an eine bereits fertig installierte Rohrleitung außen angelegt werden kann. Damit ist auch ein einfaches Wiederholen nach Veränderungen im Rohrsystem möglich. Mit einer Anordnung einer hydraulischen Anlage nach Fig. 2 lassen sich somit die Anlagekosten deutlich reduzieren.

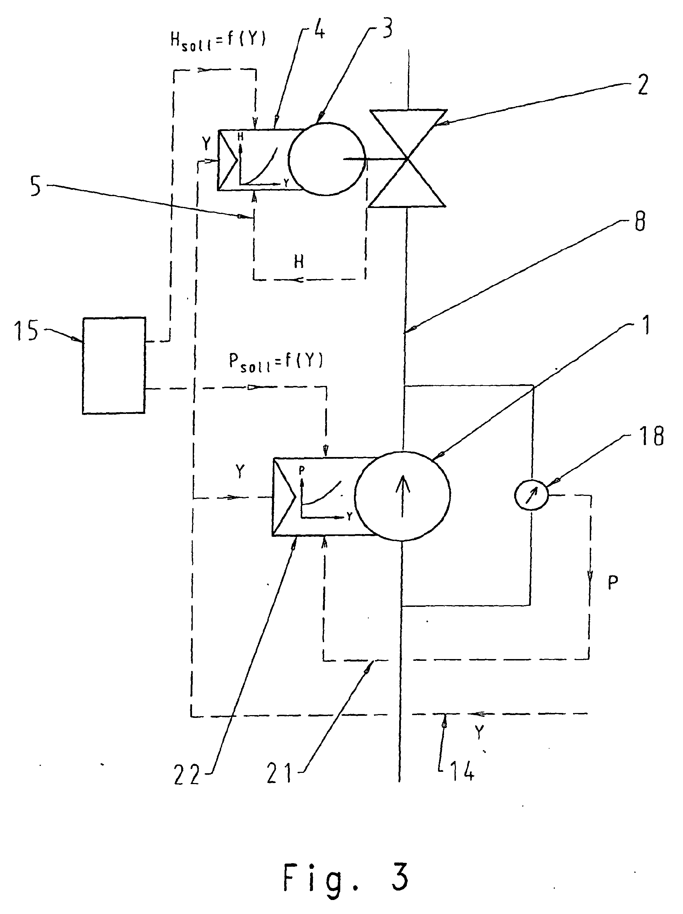

Eine weitere Reduzierung der Anlagekosten läßt sich mit einer Anordnung nach Fig. 3 erreichen. Hier wird die Elektronikeinheit 15 nur für die Einregulierung der Anlage eingesetzt. Sie kann danach aus der Anlage entfernt und für das Einregulieren anderer Anlagen eingesetzt werden. Die mit Hilfe der Elektronikeinheit 15 ermittelten Sollwerte für die Verstellung der Drosselstellung $H$ der Stellarmatur 2 bzw. der Förderhöhe $P$ der Pumpe 1 in Abhängigkeit von Stellsignal $Y$ werden nach dem Einreguliervorgang in der Regelelektronik 4 der Stellarmatur 2 bzw. der Pumpenregelung 22 gespeichert. Das Stellsignal $Y$ des Anlagenreglers 11 wird jeweils in die Regelelektronik 4 bzw. die Pumpenregelung 22 eingespeist, wo anhand der hinterlegten Abhängigkeit die Sollwerte für die Veränderung der Drosselstellung bzw. der Förderhöhe gebildet werden.

In vielen Fällen sind die Regelelektronik 4 der Stellarmatur 2 und die Pumpenregelung 22 bereits mit entsprechenden Elektronikbausteinen für die Hinterlegung der von der Elektronikeinheit 15 ermittelten Abhängigkeit ausgerüstet. Ansonsten ist es mit einfachen Mitteln möglich, eine entsprechende Möglichkeit zu schaffen.

Die Anordnung nach Fig. 3 ist sowohl bei Anlagen nach Fig. 1 als auch bei Anlagen nach Fig. 2 einsetzbar.

Neben den in den Fig. 1 bis 3 dargestellten Anordnungen sind auch Mischformen dieser Anordnungen möglich. So kann z. B. die Elektronikeinheit 15 permanent den Sollwert für Drosselstellung der Stellarmatur generieren, während die Förderhöhe der Pumpe nach dem Prinzip der Fig. 3 generiert wird. Umgekehrt kann die Elektronikeinheit 15 den Sollwert für die Förderhöhe der Pumpe erzeugen, während die Drosselstellung der Stellarmatur nach dem Prinzip der Fig. 3 erzeugt wird.

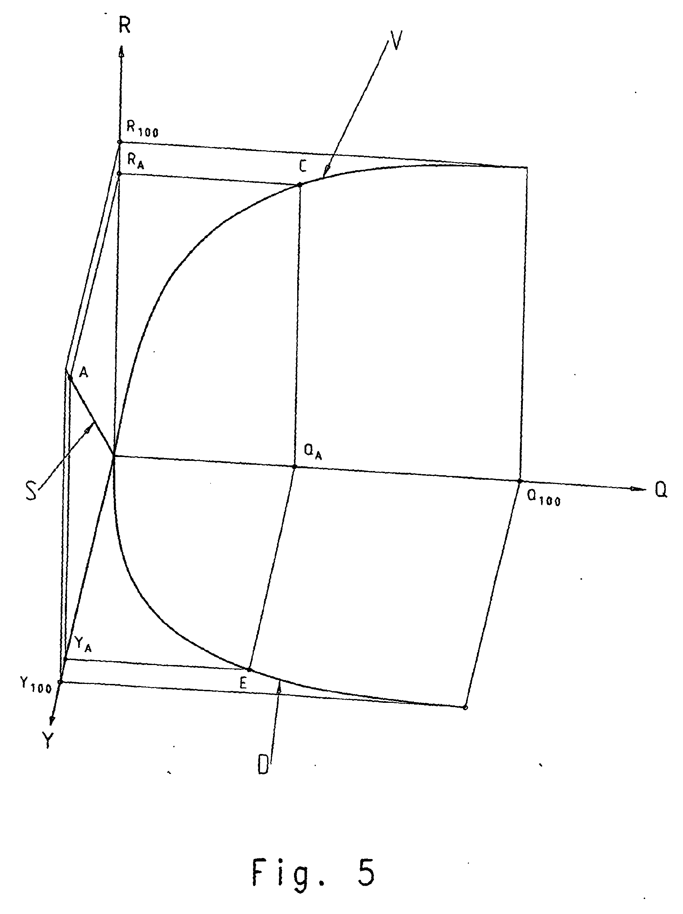

Fig. 4 zeigt eine schematische Darstellung der Hauptfunktionen der Elektronikeinheit 15. Das obere Feld zeigt schematisch die Ermittlung der Durchflußkennlinie $D$ aus der erwünschten Streckenkennlinie $S$ und der Verbraucherkennlinie $V$. Darauf wird bei der Beschreibung der Fig. 5 näher eingegangen.

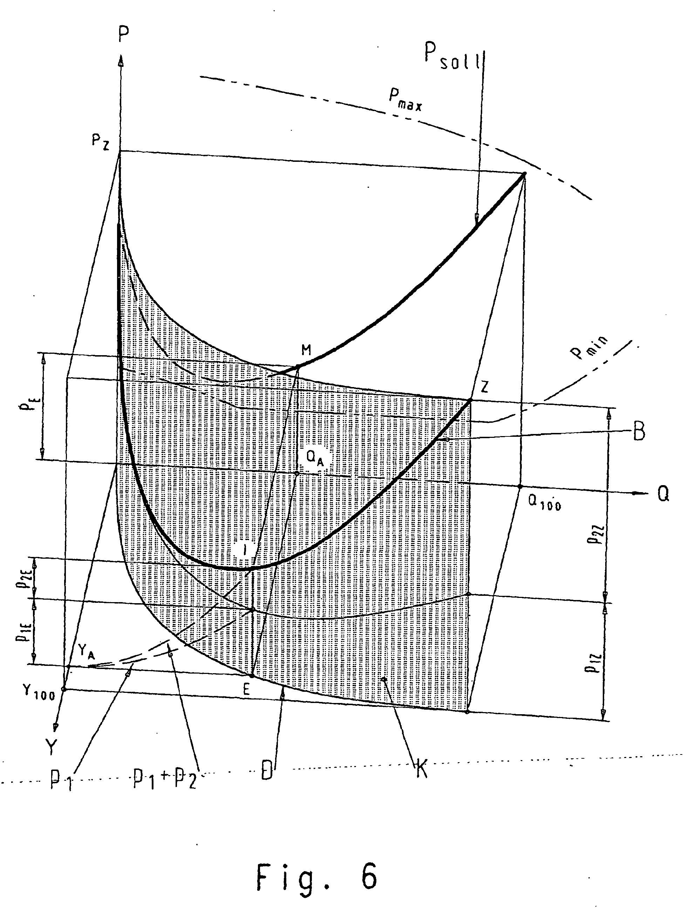

Im mittleren Feld ist schematisch das Prinzip der Realisierung der Durchflußkennlinie $D$ nach dem Merkmal des Hauptanspruches 1 dargestellt. Darauf wird bei der Beschreibung der Fig. 6 bis 8 detailliert eingegangen.

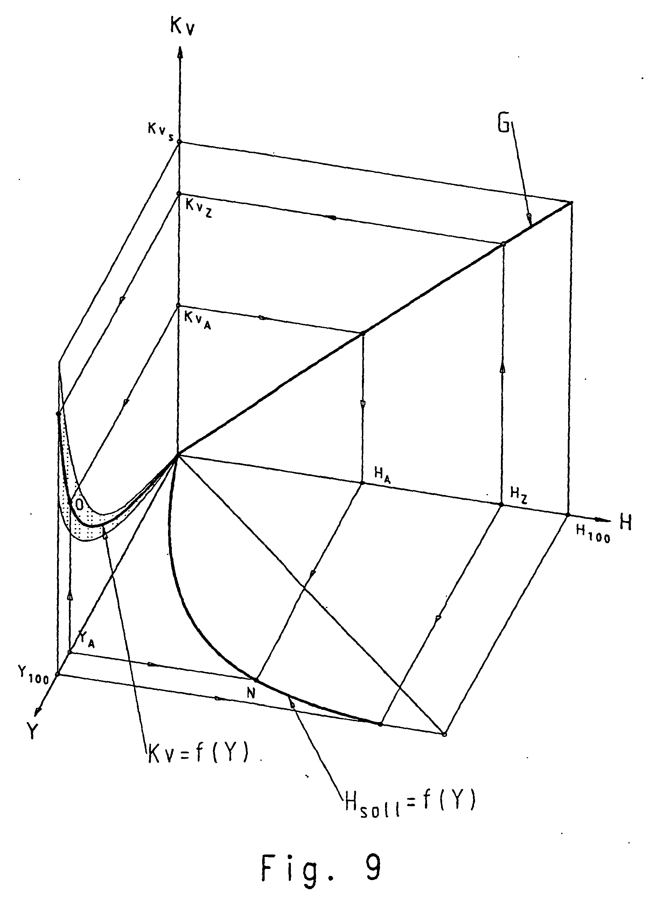

Das untere Feld zeigt schematisch die Ermittlung der Stellarmaturenkennlinie, die die Abhängigkeit der Drosselstellung $H$ vom Stellsignal $Y$ darstellt. Darauf wird in Fig. 9 näher eingegangen.

In Fig. 5 ist die Ermittlung der Durchflußkennlinie $D$ aus der Verbraucherkennlinie $V$ und der erwünschten optimalen Streckenkennlinie $S$ in einer dreidimensionalen axonometrischen Form mit den Achsen $Q$, $R$ und $Y$ dargestellt.

Verbraucherkennlinie $V$ und Streckenkennlinie $S$ werden entweder in die Elektronikeinheit 15 eingegeben oder aus einer Palette technisch relevanter Kennlinien $V$ und $S$, die in der Elektronikeinheit 15 gespeichert sind, anlagenspezifisch ausgewählt bzw. ggf. modifiziert. Dies kann z. B. im Rahmen der Einregulierung der Anlage erfolgen. Die Eingabe von $V$ und $S$ erfolgt z. B. manuell durch Eingabe von Kennlinienpunkten oder über eine geeignete PC-Schnittstelle. $V$ ist häufig anhand von physikalischen Gleichungssystemen, z. B. für Wärmetauscher aus der einschlägigen Literatur, oder aus Erfahrungs- oder Meßwerten, abzuleiten. In Fig. 5 entsprechen $V$ und $D$ bereits dem in einer konkreten Anlage benötigten Bereich von $R$ und $Q$.

Ist die Verbraucherkennlinie einer Anlage nicht exakt genug bekannt, so kann auch eine Anpassung im Rahmen des Probebetriebes erfolgen.

Als Durchflußkennlinie $D$ wird hier die Abhängigkeit des in der Anlage zirkulierenden Fluidstromes $Q$ vom Stellsignal $Y$ des Anlagereglers 11 verwendet. Es könnte auch die üblicherweise verwendete Abhängigkeit des Fluidstromes $Q$ von der Drosselstellung $H$ der Stellarmatur als Durchflußkennlinie definiert werden. Die Verwendung der Abhängigkeit des Fluidstromes $Q$ vom Stellsignal $Y$ hat den Vorteil, daß alle Achsen der Darstellungen in den Fig. 5 bis 9 eine gleiche, vorzugsweise lineare Teilung aufweisen und damit vorteilhaft zu handhaben sind.

Die Verbraucherkennlinie $V$ gibt die Abhängigkeit der Regelgröße $R$ vom Fluidstrom $Q$ und die Streckenkennlinie die Abhängigkeit der Regelgröße $R$ vom Stellsignal $Y$ wieder. Für $R$ kann entweder die tatsächliche Regelgröße, oder eine Größe die sie direkt beeinflußt, verwendet werden. Im Falle einer Raumtemperaturregelung könnte zum Beispiel die Wärmeleistung als eine solche Größe fungieren. Die Größen $Q$, $R$ und $Y$ werden meist als auf den jeweiligen Maximal- oder Nennwert bezogene Größen im Prozent angegeben. Sie können jedoch auch mit ihren physikalischen Einheiten aufgetragen werden. Dies gilt auch für die in den Figuren 6 bis 9 dargestellten Größen $P$, $kv$ und $H$.

Die Durchflußkennlinie $D$ wird aus den Koordinatoren der Streckenkennlinie $S$ und der Verbraucherkennlinie $V$ nach dem normalaxonometrischen Verfahren ermittelt. Dies ist in Fig. 5 anhand des Punktes $A$ der Streckenkennlinie $S$ dargestellt. Der Punkt $A$ hat die Koordinaten $R_A$ und $Y_A$. Daraus ergeben sich die Koordinaten $Y_A$ und $Q_A$ für den zugehörigen Punkt $E$ der Durchflußkennlinie $D$. Durch zurückloten des Punktes $A$ über die Verbraucherkennlinie $V$ auf die Achse $Q$ erhält man $Q_A$. Durch zurückloten des Punktes $A$ auf die Achse $Y$ erhält man $Y_A$. $Q_A$ und $Y_A$ bilden die Koordinaten der Punktes $E$ der Durchflußkennlinie $D$.

Die Ermittlung der erforderlichen Durchflußkennlinie kann einmalig erfolgen, z. B. bei Verbrauchern mit konstanter Verbraucherkennlinie. Es ist auch möglich, eine dynamische Anpassung der Durchflußkennlinie bei Verbrauchern vorzunehmen, deren Verbraucherkennlinie sich betriebsbedingt ändert. Dazu werden die Einflußgrößen der Verbraucherkennlinie meßtechnisch erfaßt und von der Elektronikeinheit 15 ständig zur Erzeugung der aktuellen Verbraucherkennlinien ausgewertet.

Grundsätzlich ist es auch möglich, die Durchflußkennlinie $D$ extern zu erzeugen und in die Elektronikeinheit einzugeben. Ebenso ist es möglich, eine Palette technisch relevanter Durchflußkennlinien in der Elektronikeinheit 15 zu speichern und anlagenspezifisch zu aktivieren bzw. zu modifizieren. Dies ist z. B. für Standardanlagen, die geregelt oder gesteuert werden, vorteilhaft.

Fig. 6 zeigt das Prinzip der Realisierung der Durchflußkennlinie $D$ in der hydraulischen Anlage durch Zusammenwirken von Pumpe und Stellarmatur in einer dreidimensionalen axonometrischen Darstellung mit den Achsen, $Q$, $P$ und $Y$.

Die gemäß der Beschreibung von Fig. 5 generierte Durchflußkennlinie $D$ wird in Fig. 6 übernommen.

Es ist vorteilhaft, die Fig. 6 im Rahmen des üblichen Einreguliervorganges anlagenspezifisch zu erstellen, wobei es im allgemeinen ausreicht, einen Betriebspunkt einzuregulieren. Zweckmäßig ist es, den Volllast-Betriebspunkt $Z$ mit dem in der Anlage maximal umgesetzten Fluidstrom $Q_{100}$ für die Einregulierung zu verwenden.

Dazu werden mittels der Elektronikeinheit 15 die Sollwerte von Förderhöhe der Pumpe $P$ und Drosselstellung $H$ der Stellarmatur solange verstellt, bis sich der Fluidstrom $Q_{100}$ in der Anlage eingestellt hat. Den sich bei diesem Vorgang ergebenden Werten für die Förderhöhe $Pz$ und für die Drosselstellung $Hz$ wird das Stellsignal $Y_{100}$ zugeordnet. Es ist darauf zu achten, daß $Pz$ nicht höher als nötig eingestellt wird und die Stellarmatur eine ausreichende Autorität aufweist. Der Vorgang der Einregulierung kann auch automatisiert werden.

Es gelten folgende Beziehungen für den Betriebspunkt $Z$:

$$P_Z = p_{1Z} + p_{2Z} \qquad\qquad (1)$$

$$p_{1Z} = \rho \cdot \frac{Q_{100}^2}{k_{v_z}^2} \quad \left(\text{aus } Q_{100} = k_{v_z} \cdot \sqrt{\frac{p_{1Z}}{\rho}}\right) \qquad\qquad (2)$$

$$a = \frac{p_{1Z}}{p_{1Z} + p_{2Z}} \qquad\qquad (3)$$

wobei

$P_z$ $\quad$ = Förderhöhe bei Fluidstrom $Q_{100}$

$p1z$ = hydraul. Widerstand der Stellarmatur bei $Hz$ und $Q_{100}$

$p2z$ = hydraul. Widerstand der Rohrleitungskomponenten ohne Stellarmatur bei $Q_{100}$

$\rho$ = Dichte des Fluids

$kv_z$ = $kv$-Wert der Stellarmatur bei $Hz$

$a$ = Autorität der Stellarmatur

Der Betrag von $kv_z$ wird aus Fig. 9 mit Hilfe der bei der Einregulierung eingestellten Drosselstellung $Hz$ ermittelt. Darauf wird bei der Beschreibung von Fig. 9 näher eingegangen.

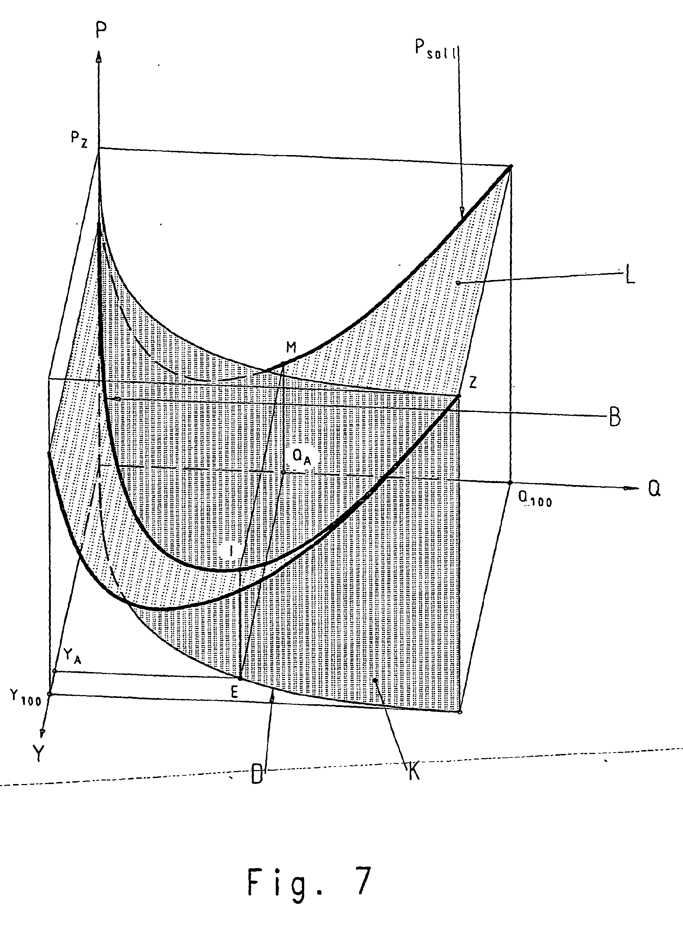

Im nächsten Schritt wird, ausgehend von der ermittelten Förderhöhe $P_z$, eine aus pumpen- und anlagentechnischer Sicht minimal notwendige Förderhöhe der Pumpe $P$ in Abhängigkeit vom Fluidstrom $Q$ vorgewählt. Diese Abhängigkeit wird als Sollwert Förderhöhenkennlinie $P_{soll}$ bezeichnet. Der Verlauf von $P_{soll}$ wird in vielen Fällen vor allem durch den Drehzahlbereich und den Wirkungsgrad der Pumpe bestimmt. Der Verlauf wird allgemein begrenzt durch einerseits den Rohrnetzwiderstand bzw. die minimal mögliche Förderhöhe der Pumpe und andererseits durch die maximal mögliche Förderhöhe der Pumpe. Die minimale Förderhöhenkennlinie $P_{min}$ und die maximale $P_{max}$ wird in Fig. 6 durch einen strichpunktierten Linienzug angedeutet. Mit Hilfe der vorgewählten Förderhöhenkennlinie $P_{soll}$ wird nach der in Fig. 7 beschriebenen Methode eine Betriebspunktekurve $B$ ermittelt. Allgemein gilt, daß ein Betriebspunkt der Anlage dadurch definiert ist, daß zu einem Stellsignal $Y$ ein Fluidstrom $Q$ entsprechend der Durchflußkennlinie $D$ in der Anlage umgewälzt wird, wobei der hydraulische Widerstand des Rohmetzes gleich der Förderhöhe der Pumpe ist.

Mit Hilfe der Betriebspunktekurve $B$ läßt sich der zu ihrer Realisierung notwendige $kv$-Wert der Stellarmatur für jeden Betriebspunkt ermitteln. Dabei gilt die Beziehung

$$p_1 = P - p_2 \qquad\qquad (4)$$

wobei z. B. für turbulente Strömung von Flüssigkeiten gilt:

$$p_2 = \sum \zeta \cdot \rho \cdot \frac{w^2}{2} \qquad\qquad (5)$$

$\zeta$ ist im allgemeinen ein konstanter Wert und $w$ proportional $Q$, so daß sich ergibt

$$p_2 = p2z \cdot \left(\frac{Q}{Q_{100}}\right)^2 \qquad\qquad (6)$$

Unter Einbeziehung der Definitionsgleichung

$$Q = k_v \cdot \sqrt{\frac{p_1}{\rho}} \qquad\qquad (7)$$

erhält man somit

$$k_v = \frac{Q}{\sqrt{\dfrac{P - p_{2Z} \cdot \left(\dfrac{Q}{Q_{100}}\right)^2}{\rho}}} \qquad (8)$$

wobei

$p_1 =$      Widerstand der Stellarmatur
$p_2 =$      Widerstand der Rohmetzkomponenten ohne Stellarmatur
$\zeta =$      Widerstandsbeiwert einer Rohrleitungskomponente
$w =$      Strömungsgeschwindigkeit in der Rohrleitungskomponente
$kv$      $kv$ -Wert der Stellarmatur

Für den bereits in Fig. 5 beispielhaft gewählten Punkte $E$ der Durchflußkennlinie $D$ ergeben sich somit folgende Beziehungen

$$p_{2E} = p_{2Z} \left(\frac{Q_A}{Q_{100}}\right)^2 \qquad (9)$$

$$p_{1E} = \rho \cdot \frac{Q_A{}^2}{kv_A{}^2} \qquad (10)$$

$$p_{1E} = P_E - p_{2E} \qquad (11)$$

$$kv_A = \frac{Q_A}{\sqrt{\dfrac{P - p_{2Z} \cdot \left(\dfrac{Q_A}{Q_{100}}\right)^2}{\rho}}} \qquad (12)$$

und damit der Punkt $I$ der Betriebspunktekurve $B$.

$kv_A$ ist der zum Stellsignal $Y_A$ gehörige $kv$-Wert der Stellarmatur, der zur Realisierung des Punktes $E$ der Durchflußkennlinie $D$ erforderlich ist.

Die Normalprojektion des Betriebspunktes $I$ in die $Q$-$Y$-Ebene ergibt den Punkt $E$ der Durchflußkennlinie $D$. Die Normalprojektion von $I$ in die $P$-$Q$-Ebene ergibt den Punkt $M$ der Förderhöhenkennlinie $P_{soll}$. Daraus abgeleitet gilt also allgemein, daß die Normalprojektion der Betriebspunktekurve $B$ in die $P$-$Q$-Ebene mit der Förderhöhenkennlinie $P_{soll}$ zusammenfällt und die Normalprojektion der Förderhöhenkennlinie $P_{soll}$ in die Fläche $K$ deren Beschreibung noch folgt, mit der Betriebspunktekurve $B$ übereinstimmt.

Eine weitere Möglichkeit der Erstellung der Fig. 6 besteht darin, nicht eine Förderhöhenkennlinie $F$ vorzuwählen, sondern eine Stellarmaturenkennlinie $kv = f(Y)$. Aus den bereits aufgeführten Gleichungen des hydraulischen Widerstandes von Stellarmatur und Rohmetzkomponenten ohne Stellarmatur nämlich

$$p_1 = \rho \cdot \frac{Q^2}{k_{VA}{}^2} \qquad\qquad ( 13 )$$

$$p_2 = p_{2Z} \cdot \left( \frac{Q_A}{Q_{100}} \right)^2 \qquad\qquad ( 14 )$$

deren Verlauf in Fig. 6 gestrichelt eingetragen ist, erhält man für Punkt *E* die Werte

$$p_{1E} = \rho \cdot \frac{Q_A{}^2}{k_{VA}{}^2} \qquad\qquad ( 15 )$$

$$p_{2E} = p_{2Z} \cdot \left( \frac{Q_A}{Q_{100}} \right)^2 \qquad\qquad ( 16 )$$

Gemäß der Bedingung, daß in jedem Betriebspunkt der hydraulische Widerstand des Rohmetzes gleich der Förderhöhe der Pumpe sein muß, erhält man

$$P_E = p_{1E} + p_{2E} \qquad\qquad ( 17 )$$

Aus der graphischen Darstellung ist erkennbar, welche Auswirkung die Nichteinhaltung der obigen Bedingung hat. Ist z. B. die zu Punkt *E* an der Pumpe eingestellte Förderhöhe größer als $P_E$, so liegt der Schnittpunkt von Förderhöhe der Pumpe und hydraulischen Widerstand des Rohmetzes $p_1$ und $p_2$ beim Stellsignal $Y_A$ bei einem größeren Förderstrom als $Q_A$. Die Durchflußkennlinie wird damit nicht mehr eingehalten. Liegt umgekehrt die Förderhöhe der Pumpe niedriger und der Schnittpunkt somit bei einem kleineren Förderstrom als $Q_A$, so wird die Durchflußkennlinie ebenfalls nicht eingehalten.

Daraus folgt, daß alle Betriebspunkte, welche die Bedingung erfüllen, daß der hydraulische Widerstand des Rohrnetzes gleich der Förderhöhe der Pumpe sein muß auf einer Fläche *K* liegen müssen, deren Normalprojektion in die *Q-Y*-Ebene mit der Durchflußkennlinie *D* zusammenfällt.

In Fig. 7 ist die Ermittlung der Betriebspunktekurve *B* aus der vorgewählten Förderhöhenkennlinie $P_{soll}$ unter Anwendung dieser Gesetzmäßigkeit dargestellt. Man erhält B als Schnittkurve der Fläche *K* mit der Fläche *L,* deren Normalprojektion in die *P-Q*-Ebene die Förderhöhenkennlinie $P_{soll}$ ergibt.

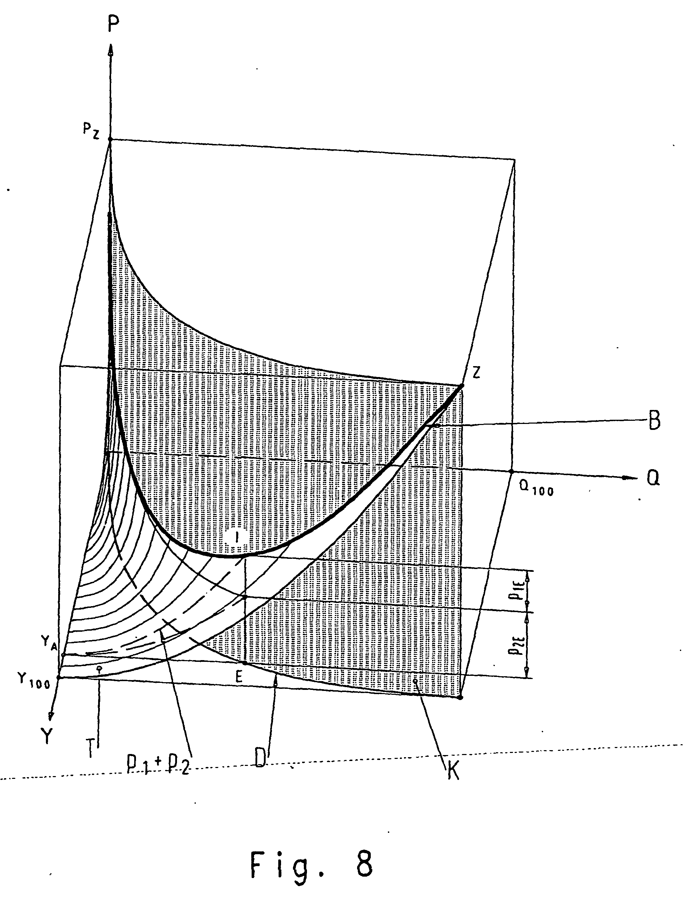

In Fig. 8 ist die Ermittlung der Betriebspunktekurve *B* für den Fall einer vorgewählten Stellarmaturenkennlinie *kv= f(Y)* dargestellt.

Der zu Punkt *E* der Durchflußkennlinie *D* gehörige Betriebspunkt *I,* dessen Ermittlung bei der Beschreibung von Fig. 6 dargestellt wurde, ist der Schnittpunkt der Kurve des hydraulischen Widerstandes *p*1 und *p*2 mit der Fläche *K* . Für alle anderen Punkte der Durchflußkennlinie *D* ergeben sich nach dem gleichen Prinzip die jeweils zugehörigen Betriebspunkte. Alle Kurven des hydraulischen Widerstandes zusammen bilden eine Fläche *T* , deren Schnittkurve mit der Fläche *K* die Betriebspunktekurve *B* ist.

Fig. 9 zeigt die Ermittlung der Stellarmaturenkennlinie *kv= f(Y)* bzw. der Drosselstellung *H* der Stellarmatur in einer analogen Darstellung gemäß Fig. 5 mit den Achsen *H, kv* und *Y.*

Im Rahmen der Einregulierung der Anlage wird die zu $Y_{100}$ gehörige Drosselstellung $H_z$ ermittelt wie in Fig. 6 beschrieben. *Hz* wird in der Regel kleiner als der maximal mögliche Wert $H_{100}$ sein. Mit Hilfe der Grundkennlinie *G* der Stellarmatur läßt sich der zu *Hz* gehörende *kv*-Wert $K_{VZ}$ ermitteln. Die Grundkennlinie *G* gibt die Abhängigkeit des *kv*-Wertes von der Drosselstellung *H* der Stellarmatur wieder. Da *Hz* kleiner als $H_{100}$ ist, ist auch $k_{VZ}$ kleiner als der maximale *kv*-Wert $k_{VS}$ der Stellarmatur.

Bei Vorwahl der Förderhöhenkennlinie $P_{soll}$ wird, wie in Fig. 6 beschrieben, der zu einem Betriebspunkt zugehörige *kv*-Wert ermittelt, für den Betriebspunkt *I* mit dem zugehörigen Stellsignal $Y_A$ war dies gemäß den Ausführungen zu Fig. 6 der Wert $k_{VA}$. Aus dem Wertepaar $Y_A$ und $k_{VA}$ kann sowohl der Punkt 0 der Kennlinie *kv = f (Y)* , als auch die zum Stellsignal $Y_A$ gehörige Drosselstellung $H_A$ und der Punkt *N* der Verstellgesetzmäßigkeit $H_{Soll}$ = *f (Y)* abgeleitet werden.

Bei Vorwahl der Stellarmaturenkennlinie *kv= f(Y)* wird sinngemäß vorgegangen. Ausgangspunkt ist jedoch ein Punkt der Kennlinie *kv= f(Y),* in diesem Beispiel Punkt 0. Daraus ergibt sich dann Punkt N der Verstellgesetzmäßigkeit $H_{soll}$ = *f(Y).*

Bei der Vorwahl der Förderhöhenkennlinie $P_{soll}$ könnten sich unter Umständen *kv*-Werte für die Stellarmaturen ergeben, die die technischen Möglichkeiten der eingesetzten Bauart übersteigen. Es ist daher möglich, die mögliche Variationsbreite der Kennlinie *kv= f(Y)* in Fig. 9 einzugrenzen. Dies ist in Form des schraffierten Bereiches der *kv*-*Y*-Ebene angedeutet. Liegt ein zu einem Wertepaar *kv , Y* gehörender Kennlinienpunkt außerhalb des schattierten Bereiches, so muß die Förderhöhenkennlinie *F* entsprechend modifiziert werden.

Bei der Vorwahl der Stellarmaturenkennlinie *kv = f(Y)* besteht die Möglichkeit, daß die Grenzen der Förderhöhenkennlinie $P_{soll}$ der Pumpe überschritten werden, so daß eine Modifizierung der vorgewählten Stellarmaturenkennlinie *kv = f(Y)* notwendig wird.

Es gibt mehrere Möglichkeiten, den für die Konstruktion von Fig. 6 benötigten Verlauf der hydraulischen Widerstände der Rohrleitungskomponenten ohne Stellarmatur (= $p_2$) und der Stellarmatur (= $p_1$) zu ermitteln.

Eine Möglichkeit besteht dann, $p_1$ und $p_2$ rechnerisch anhand der bekannten physikalischen Gleichungen zu ermitteln. Nachträglich durchgeführte meßtechnische Überprüfungen an ausgeführten Anlagen ergaben, daß berechnete Widerstandskennlinien häufig nicht mit den tatsächlichen Widerstandskennlinien einer ausgeführten Anlage übereinstimmen. Abweichungen von bis zu 30% und mehr wurden festgestellt. Dies liegt hauptsächlich an der Ermittlung von $p_2$. Der hydraulische Widerstand $p_1$ marktüblicher Stellarmaturen ist relativ genau, da der *kv*-Wert nach Norm eine Toleranz von maximal 10% aufweisen darf.

Bei der, bei der Beschreibung von Fig. 6 geschilderten Möglichkeit, wird $p_2$ aus dem gemessenen Wert der Förderhöhe der Pumpe *P* und dem mit dem *kv*-Wert errechneten $p_1$ ermittelt. Dies ist wesentlich genauer, als die rein rechnerische Methode und bei Standardanforderungen ausreichend. Eine weitere Verbesserung der Genauigkeit erhält man durch Messung des hydraulischen Widerstandes $p_1$ der Stellarmatur beim Einreguliervorgang.

Eine noch weitergehende Verbesserung der Genauigkeit ist durch die Einregulierung nicht nur des Vollast-Betriebspunktes *Z ,* sondern von mehreren Betriebspunkten im Teillastbereich möglich.

Bei Anlagen mit Rohmetzkomponenten, deren hydraulischer Widerstand infolge sich ändernder Widerstandsbeiwerte ζ variabel ist, ist es möglich, den hydraulischen Widerstand dieser Komponenten durch Meßgeräte zu erfassen und in die Elektronikeinheit einzuleiten. Die Elektronikeinheit nimmt dann eine permanente Anpassung von Förderhöhenkennlinie und Stellarmaturenkennlinie vor.

Eine andere Möglichkeit besteht darin, das *Q* -Signal permanent in die Elektronikeinheit 15 einzuleiten und dort mit dem jeweiligen Sollwert entsprechend der Zuordnung von Stellsignal *Y* und Fluidstrom *Q* entsprechend der Durchflußkennlinie *D* zu vergleichen. Bei Abweichungen werden die Sollwerte von Förderhöhe P und/oder Drosselstellung *H* solange verändert, bis der Sollwert des Fluidstromes *Q* erreicht ist. Diese Möglichkeit besteht auch bei Anlagen mit konstanten Widerstandsbeiwerten ζ der Rohmetzkomponenten ohne Stellarmatur.

Da diese Veränderung auf die Regelgröße zurückwirkt, ist sie vor allem bei trägen Strecken vorteilhaft anwendbar. In beiden Fällen wird damit auch die Genauigkeit der Realisierung der Durchflußkennlinie in der Anlage verbessert.

Der Widerstandsbeiwert von Rohmetzkomponenten kann sich z. B. durch Änderungen des Rohmetzes, durch Verschmutzungen bzw. Inkrustierungen oder auch durch zusätzliche Regel- und Steuergeräte am Verbraucher ändern.

Mit der in den Fig. 1 bis 9 beschriebenen Ausgestaltungen können viele Anforderungen der Anlagentechnik in vorteilhafter Weise erfüllt werden.

Die Realisierung einer optimalen Durchflußkennlinie und damit einer optimalen Streckenkennlinie führt zu einer Verbesserung der Regelgüte. Die Autorität der Stellarmatur kann verkleinert werden. Dies reduziert den hydraulischen Widerstand der Anlage und damit die erforderliche Förderhöhe und den Energiebedarf der Pumpe.

In vielen Anlagen sind die stellarmaturentechnischen Anforderungen niedrig, so daß praktisch nur die pumpentechnischen Parameter wie z. B. Drehzahlbereich, minimale Förderhöhe, Wirkungsgrad usw. bestimmend sind. In diesen Fällen ermöglicht die Vorwahl einer Fluidstromkennlinie eine zusätzliche Optimierung des Druckniveaus auf den minimal erforderlichen Wert. Die Energieaufnahme der Pumpe wird in entscheidendem Maße minimiert.

Die Vorwahl der Stellarmaturenkennlinie ist bei Anlagen angebracht, bei denen die stellarmaturentechnischen Anforderungen, wie z. B. Geräuschentwicklung, Kavitation, Stellverhältnis usw. bestimmend sind.

Im Normalfall wird jedoch vorteilhafter Weise sowohl die Stellarmaturenkennlinie als auch die Förderhöhenkennlinie innerhalb der zulässigen Grenzen verändert, wobei auf eine möglichst niedrige Förderhöhenkennlinie optimiert wird. Dabei ist es auch möglich, in bestimmten Fluidstrombereichen der Anlage nur die Pumpenförderhöhe zu verändern und die Drosselstellung der Stellarmatur unverändert zu belassen, oder die Drosselstellung der Stellarmatur zu verändern und die Pumpenförderhöhe unverändert zu belassen. Auf diese Weise kann ein großes Spektrum an Anforderungen der Anlagentechnik erfüllt werden, so daß praktisch für jede Anlage eine optimale Streckenkennlinie bei minimalen Energiebedarf der Pumpe erzeugt werden kann.

Häufig führt diese Vorgehensweise auch zu einer Reduzierung der in der Anlage benötigten Pumpengröße.

Neben der Möglichkeit der Erzeugung von optimalen Durchflußkennlinie für Regelzwecke besteht auch die Möglichkeit, dieses System zur Erzeugung von Durchflußkennlinien für Steuerungen einzusetzen. Auch die Erzeugung von Streckenkennlinien, die an spezielle nichtlineare Regler angepaßt werden müssen, ist möglich. Die Bildung der zugehörigen Durchflußkennlinie erfolgt analog zu der in Fig. 5 beschriebenen Vorgehensweise. Die Möglichkeit einer Reduzierung des Energiebedarfes der Pumpe kann in beiden Fällen voll genutzt werden.

Die in den Fig. 4 bis 9 graphisch dargestellten Abhängigkeiten der jeweiligen physikalischen Größen sind in der Elektronikeinheit abgespeichert bzw. werden von der Elektronikeinheit in der oben beschriebenen Weise ermittelt. Einzelne oder auch alle Größen bzw. Abhängigkeiten können je nach Aufbau der Elektronikeinheit modifiziert und an Anlagenparameter angepaßt werden. Die Art der Ermittlung bzw. Modifizierung wird je nach Auslegung der Elektronikeinheit beim Hersteller vorgegeben oder bei einer Inbetriebnahme einer Anlage in die Elektronikeinheit eingegeben bzw. angepaßt. Die Elektronikeinheit ermittelt mit Hilfe der hinterlegten Abhängigkeiten aus der eingeleiteten Stellgröße die Sollwerte für die Drosselstellung der Stellarmatur und die Förderhöhe der Pumpe und leitet die entsprechenden Signale an Stellarmatur und Pumpe, wodurch die gewünschte regelungstechnisch optimale und energiesparende Betriebsweise der Anlage erreicht wird. In der Elektronikeinheit ist dazu die notwendige Hard- und Software vorgesehen.

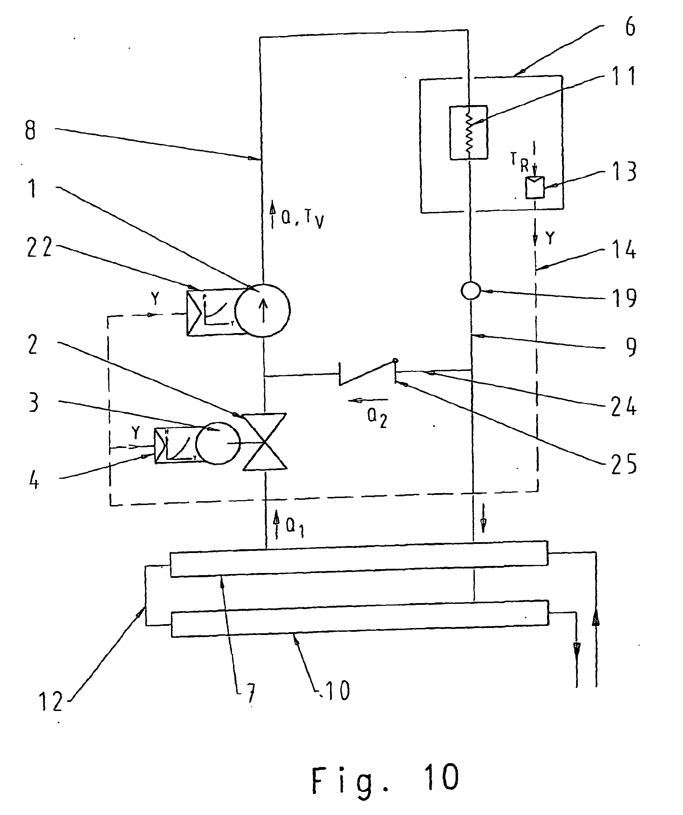

Fig. 10 zeigt ein schematisches Beispiel einer Anlage mit Durchfluß-Beimisch-Regelung in einreguliertem Zustand. Aus diesem Grunde wurde in Fig. 10 eine zur Einregulierung der Anlage verwendete Elektronikeinheit 15 nicht gezeichnet. Während der Einregulierung wurden die Verstellgesetzmäßigkeiten H = f(Y) in der Regelelektronik 4 der Stellarmatur 2 bzw. P = f(Y) in der Pumpenregelung 22 abgespeichert. An Stelle der Abspeicherung in der Regelelektronik 4 bzw. der Pumpenregelung 22 ist auch die Abspeicherung in einem gesonderten Elektronikbaustein möglich. Die Pumpe 1 ist mit integrierter Differenzdruckregelung und die Stellarmatur 2 ist ohne Stellungsregler dargestellt. Die Bezeichnung der einzelnen Komponenten entspricht denjenigen der Fig. 1. Die in den Fig. 1 und 2 gezeigten Möglichkeiten sind bei einer solchen kombinierten Durchfluß-Beimisch-Regelung ebenfalls anwendbar.

Gegenüber der Ausführungsform von Fig. 1 ist eine Beimischleitung 24 und eine Armatur 25, hier in Form eines Rückflußverhinderers, hinzugekommen. Durch die Beimischleitung 24 wird Fluid aus der Rücklaufleitung 9 zur Vorlaufleitung 8 zurückgeleitet. Im Volllastfall der Anlage mit maximaler Wärmeleistung befindet sich die Armatur 25 in einer Geschlossen-Stellung, wodurch der Bypass-Fluidstrom einen Wert Null aufweist. Mit abnehmendem Lastfall und Reduzierung der Wärmeleistung beginnt die Stellarmatur 2 zu schließen und der Armatur 25 zu öffnen. Im seltenen Lastfall Nulllast ist die Stellarmatur 2 geschlossen und der gesamte umzuwälzende Fluidstrom strömt durch die Beimischleitung 24. An Stelle einer Armatur in Form des dargestellten Rückflußverhinderers 25 kann auch eine Stellarmatur vorgesehen werden. Diese erleichtert eine individuelle Anpassung an nicht standardisierte Anlagen, da es damit sehr einfach möglich ist, die Kennlinie der Stellarmatur in der Beimischleitung 24 an die jeweiligen Anlagenbedingungen anzupassen. $Q_1$ entspricht dem Fluidstrom, der einem Verteilsystem, hier einem Vorlaufverteiler 7, entnommen und in den dargestellten Rohrleitungsstrang eingespeist wird. $Q_2$ entspricht dem Fluidstrom durch die Beimischleitung 24. $Q$ ist der durch die Pumpe 1 strömende gesamte Fluidstrom aus $Q_1$ und $Q_2$. Der Fluidstrom $Q$ verfügt über die Vorlauftemperatur $Tv$.

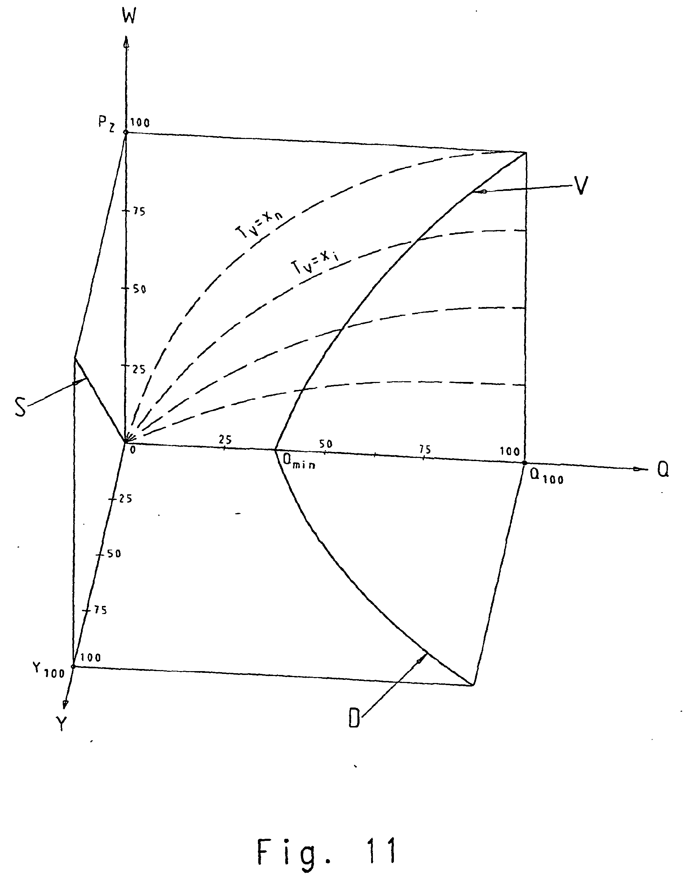

Fig. 11 zeigt für das Ausführungsbeispiel der Fig. 10 die Ermittlung der Durchflußkennlinie $D$ aus der Verbraucherkennlinie $V$ und der erwünschten linearen Streckenkennlinie $S$ in axonometrischer Darstellung mit den Achsen Q, Y und W, wobei W die Wärmeleistung des Wärmetauschers 11 ist. Fig. 11 entspricht in ihrem Aufbau der Fig. 5.

Bei einer Raumtemperaturregelung wird die Raumtemperatur dadurch konstant gehalten, daß die Wärmeleistung W des Wärmetauschers 11 ständig an den Wärmeverlust des Raumes angepaßt wird. Jede Veränderung der Wärmeleistung bzw. der Wärmeverluste führt zu einer proportionalen Änderung der Raumtemperatur $T_R$. Wie bereits ausgeführt, kann daher an Stelle der Regelgröße Raumtemperatur auch die Wärmeleistung zur Linearisierung der Streckenkennlinie $S$ herangezogen werden. Die Verwendung der Wärmeleistung bietet den Vorteil einer einfacheren Vorausberechnung einer Anlage, da praktisch für nahezu alle Ausführungsformen von Wärmetauschern relativ genaue Berechnungsformeln vorliegen.

Der Verlauf der Verbraucherkennlinie $V$ ergibt sich aus den bekannten Gleichungen für die Berechnung der Wärmeleistung des Wärmetauschers und für die Mischung der beiden Fluidströme $Q_1$ und $Q_2$. Da solche Anlagen im Regelfall aus standardisierten Komponenten in standardisierter Anordnung bestehen, kann daraus eine für eine breite Anwendung geeignete Verbraucherkennlinie abgeleitet werden. Das Ergebnis ist dann die dem jeweiligen Fluidstrom $Q$ entsprechend der Verbraucherkennlinie $V$ zugeordnete Wärmeleistung W unter Einbeziehung der $Q$ zugeordneten Vorlauftemperatur $Tv$. Es ist auch möglich die Verbraucherkennlinie im Rahmen der Einregulierung jeweils anlagenbezogen mit Hilfe der bekannten physikalischen Gleichungen zu ermitteln. Die Realisierung der Durchflußkennlinie durch Zusammenwirken von Pumpe 1 und Stellarmatur 2 erfolgt analog der vorstehend beschriebenen Vorgehensweise.

Bei der kombinierten Durchfluß-Beimisch-Regelung wird der Fluidstrom nicht auf Null, sondern bis zu einem Minimalwert $Q_{min}$ reduziert. Dieser ist so gewählt, daß die Leistungscharakteristik eines Wärmetauschers bzw. die Beaufschlagung einer Wärmetauscherfläche noch ausreichend gleichmäßig ist. Dies verbessert das Regelverhalten im Schwachlastbereich und vermeidet ein Einfrieren des Wärmetauschers.

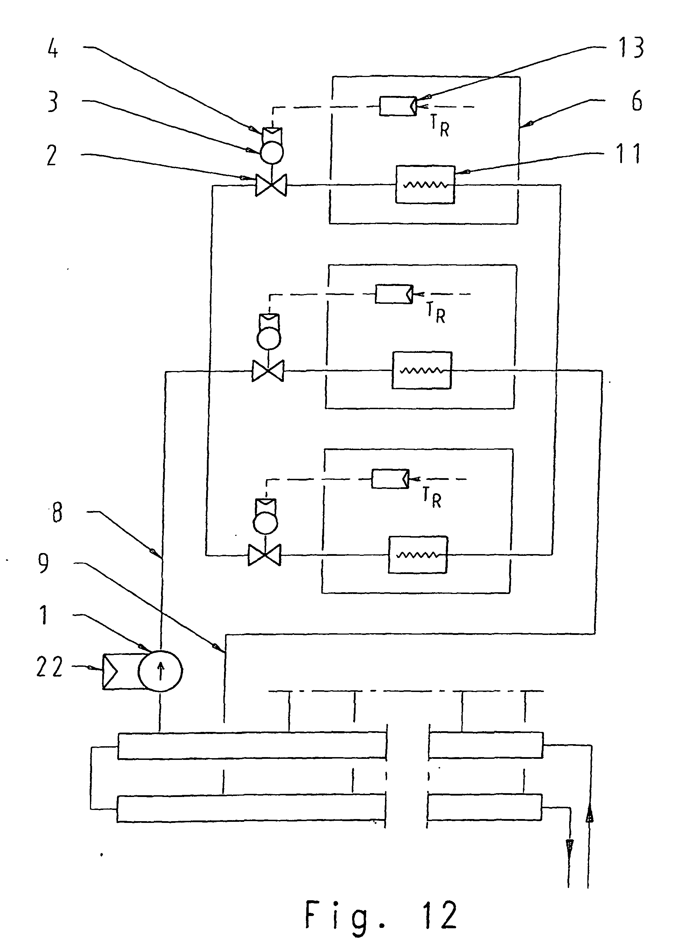

Fig. 12 zeigt schematisch vereinfacht ein vorteilhaftes Beispiel einer Verbrauchergruppe einer Heizungsanlage, bei der eine Pumpe 1 mehrere Räume 6 mit jeweils unterschiedlichen, nur teilweise unterschiedlichen oder auch gleichen Durchflußkennlinien versorgt. Auch hier ist die Anlage bereits einreguliert. Die Verstellgesetzmäßigkeiten für die Drosselstellungen der Stellarmaturen 2 sowie für die Förderhöhenkennlinie der Pumpe 1 wurden in den Regelelektroniken 4 der Stellarmaturen 2 beziehungsweise in der Pumpenregelung 22 abgespeichert. In solchen Fällen ist es zweckmäßig, die Förderhöhenkennlinie der Pumpe 1 vorzuwählen, und zwar mit $P_{soll}$ = konstant über den gesamten Fluidstrombereich, wenn die Rohrleitungen 8, 9 zwischen Verteiler/Sammler 7/10 und den Verbrauchern 6 widerstandsarm ausgelegt sind. Der Rohrleitungswiderstand der Rohrleitungen 8, 9 muß einen vemachlässigbar kleinen Anteil am gesamten Rohrleitungswiderstand haben. Denn bei einem hohen Widerstand, zum Beispiel bei großer Entfernung oder nicht druckverlustarmer Auslegung, führen Fluidstromschwankungen infolge unterschiedlicher Lastzustände der einzelnen Verbraucher 6 zu einer Verzerrung der Durchflußkennlinie und damit zur Verschlechterung der Regelgüte.

Diese Verzerrung kann durch eine Korrektur von $P_{soll}$ nach unten, ausgehend vom Volllastbetriebspunkt $Z$, in Abhängigkeit des in dieser Rohrleitung 8, 9 fließenden Fluidstromes kompensiert werden. Dies erfolgt dadurch, daß entsprechend der Abhängigkeit des Rohrleitungswiderstandes vom Fluidstrom der Sollwert $P_{soll}$ der Pumpenförderhöhe reduziert wird, wenn der Fluidstrom in der Rohrleitung 8 und 9 zurückgeht. Die Reduzierung von $P_{soll}$ entspricht somit der Abnahme des Rohrleitungswiderstandes infolge der abnehmenden Strömungsgeschwindigkeit.

Der Vorteil dieser Verfahrensweise liegt darin, daß nur der Förderhöhensollwert $P_{soll}$ der Pumpe 1 korrigiert werden muß. Auf die aufwendige Korrektur der Drosselstellungen aller Stellarmaturen 2 kann dann verzichtet werden. Und da der Widerstand der Rohrleitung 8, 9 zwischen Verteiler/Sammler 7/10 und der Verbrauchergruppe für alle Verbraucher gleich ist, ist diese Vorgehensweise möglich. Zumal marktübliche Pumpen die Möglichkeit bieten, eine entsprechende Förderhöhenkennlinie einzustellen. Am kostengünstigsten erfolgt dies durch handelsübliche Pumpen mit variabler Förderhöhenkennlinie, die aus pumpeninternen Daten generiert wird. Der Abfall der Förderhöhenkennlinie erfolgt meist linear, entspricht somit nicht exakt der quadratischen Abhängigkeit zwischen Rohrleitungswiderstand und Fluidstrom. Die damit erreichbare Genauigkeit ist vertretbar, wenn der Anteil der Rohrleitungsverluste der Rohrleitung 8, 9 zwischen Verteiler/Sammler 7/10 und Verbrauchergruppe nicht zu hoch ist. Bei Verwendung von genaueren, aber etwas aufwendigeren Pumpenregelungen wird der Fluidstrom gemessen und daraus eine Förderhöhenkennlinie mit quadratischer Abhängigkeit zwischen Fluidstrom und Förderhöhe gebildet.

Sowohl bei konstantem als auch bei korrigiertem $P_{soll}$ muß ein Stellsignal $Y$ eines Raumtemperaturreglers 13 nicht zur Pumpenregelung 22 geleitet werden, sondern nur zu der Regelelektronik 4 der Stellarmaturen 2.

Der Rohrleitungswiderstand der Rohrleitung 8, 9 zwischen Verteiler/Sammler und Verbrauchergruppe wird im Rahmen der Einregulierung der Anlage ermittelt und zwar durch Messung, Berechnung oder auf Grund entsprechender Erfahrung mit vergleichbaren Anlagen. Eine weitere Möglichkeit besteht darin, nicht nur den Volllast-Betriebspunkt, sondern zusätzlich einen oder mehrere Teillast-Betriebspunkte einzuregulieren.

Wenn bei herkömmlichen Anlagen für eine Stellarmatur die empfohlene Autorität zur Erzielung einer akzeptablen Regelgüte mindestens 50 bis 70% beträgt, so kann mit Hilfe der erfindungsgemäßen Lösung die Autorität der Stellarmaturen 2 auf deutlich unter 50% abgesenkt werden. Damit ergibt sich die vorteilhafte Möglichkeit zur Energieeinsparung bei zusätzlich verbesserter Regelgüte.

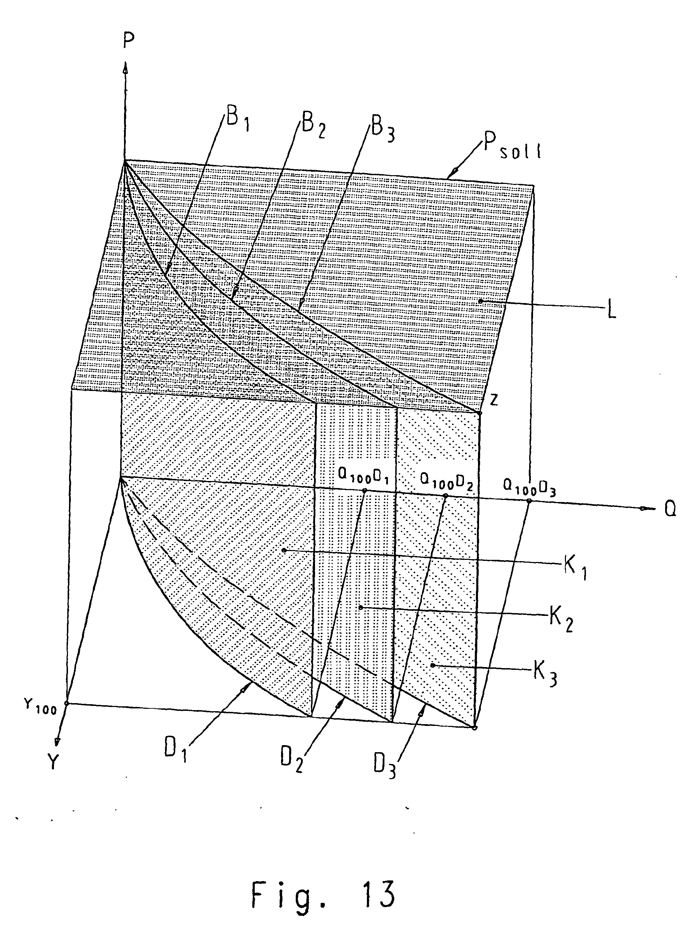

Wie Fig. 13 zeigt, läßt sich für jeden Verbraucher von Fig. 12 analog dem zu Fig.5 beschriebenen Prinzip die zugehörige Durchflußkennlinie $D$ ermitteln. Mit dieser für jeden Verbraucher 6 individuellen Durchflußkennline $D$ kann dann die zu jedem Verbraucher 6 gehörige Betriebspunktekurve $B$ nach dem Prinzip der Fig.7 und die Drosselstellung der Stellarmatur 2 nach dem Prinzip der Fig.9 ermittelt werden. Auf diese Weise gelingt es, die Vorteile einer optimalen Streckenkennlinie $S$ bzw. Durchflußkennlinie $D$ und der daraus resultierenden Möglichkeit, die Autorität der Stellarmatur 2 zu vermindern, auch für Anlagen mit einer Pumpe 1 und gleichzeitig mehreren Verbrauchern 6 zu realisieren. $D_1$ bis $D_3$ sind die Durchflußkennlinien von hier nur beispielhaft herangezogenen drei Verbrauchern. $K_1$ bis $K_3$ stellen die entsprechenden Zylinderflächen analog der Fig. 7 dar. $B_1$ bis $B_3$ sind die zugehörigen Betriebspunktekurven der zu betreibenden Verbraucher 6. Sie ergeben sich als Schnittkurven der Flächen $K_1$ bis $K_3$ mit der Fläche $L$, wobei die Normalprojektion der Fläche $L$ in die $P$-$Q$-Ebene die Förderhöhenkennlinie $P_{soll}$ ergibt. Dies erfolgt analog der Fig. 7, aber mit dem Unterschied, daß ein System mit $P_{soll}$ = konstant Anwendung findet. Für die einzelnen Verbraucher findet eine gemeinsame Förderhöhenkennlinie $P_{soll}$ Anwendung und die Fläche $L$ ist eine ebene Fläche.

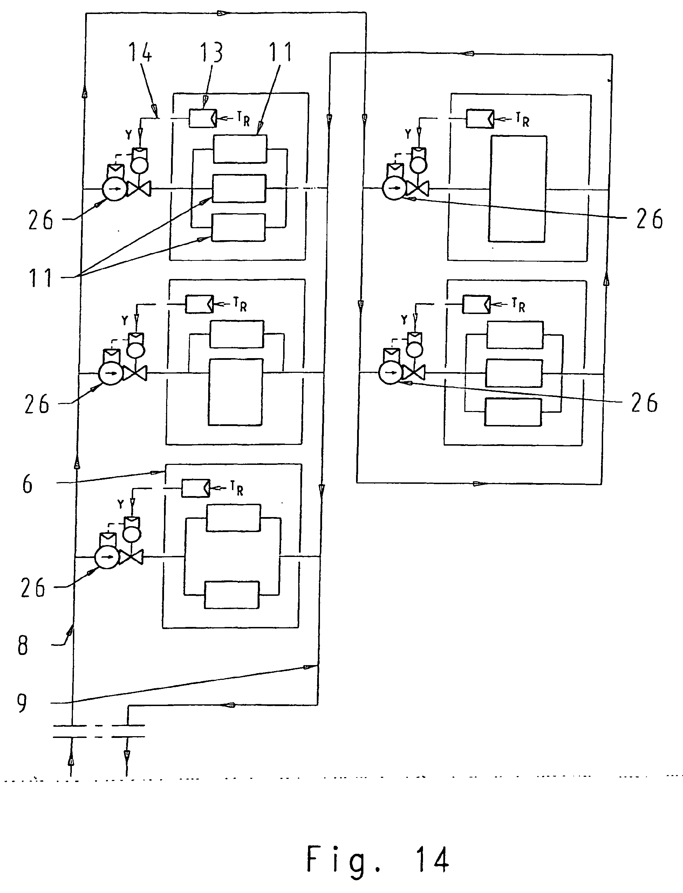

Eine weitere vorteilhafte Anwendung ergibt, sich wenn die einzelnen regelungstechnischen Komponenten pro Raum zu jeweils einer Pumpen-Stellarmaturen-Einheit 26 zusammen gefaßt werden. Fig.14 zeigt schematisch vereinfacht eine derartige Anlage. In einer Pumpen-Stellarmaturen-Einheit 26 sind ein aus den anderen Figuren bekanntes Pumpenaggregat 1 inklusive Pumpenregelung 22 sowie eine Stellarmatur 2 mit Stellantrieb 3 und Regelelektronik 4 zusammengefaßt. Die Anlage ist in einreguliertem Zustand ohne Elektronikeinheit 15 gezeigt. Die Verstellgesetzmäßigkeiten für die Förderhöhe der Pumpe und die Drosselstellung der Stellarmatur ist in der Pumpenregelung 22 bzw. in der Regelelektronik 4 der Stellarmatur 2 abgespeichert.

Eine genaue hydraulische Abstimmung der Pumpen-Stellarmaturen-Einheit 26 auf einen jeweils zugeordneten Raum 6 ergibt in Verbindung mit der linearisierten Streckenkennlinie $S$ und der dadurch ermöglichten niedrigen Autorität der Stellarmaturen eine deutlich reduzierte Pumpenförderhöhe. Eine weitere Reduzierung erfolgt durch den dadurch möglichen Wegfall der Strangregulierventile herkömmlicher Anlagen. Jede Pumpen-Stellarmaturen-Einheit 26 erzeugt nur noch die Förderhöhe, die zur Versorgung des zugehörigen Raumes 6 erforderlich ist.

Die Vorlaufleitung 8 und die Rücklaufleitung 9 sind vorteilhafterweise als Ringleitung ausgebildet, da dadurch Druckschwankungen minimiert werden. Die Umwälzung des Fluids in der Ringleitung erfolgt durch eine hier nicht dargestellte Pumpe, die bei herkömmlichen Anlagen den Verteiler versorgt. Die reduzierte Pumpenförderhöhe führt in Verbindung mit der größeren Anzahl von Pumpen zu kleineren, kompakteren und einfach zu montierenden Pumpen-Stellarmaturen-Einheiten 26. Diese können aus kostengünstigen, raumsparenden Pumpen und Stellarmaturen bestehen. Eine Integration einer Stellarmatur in ein Pumpengehäuse oder ein Blockaggregat aus Pumpe und Stellarmatur ist möglich.

Bei Heizungs- oder Klimaanlagen, die für jeden Raum mit Pumpen-Stellarmaturen-Einheiten 26 ausgerüstet sind, können mehr Räume als bei herkömmliche Anlagen mit nur einem Strang bedarfsgerecht versorgt werden. Denn die Pumpen-Stellarmaturen-Einheiten 26 sind individuell auf den jeweiligen Raum 6 abgestimmt. Aus diesem Grunde kann die Anzahl der in einem Gebäude notwendigen Stränge und deren notwendige Einbauten verringert werden. Dies führt zu erheblichen Kosteneinsparungen im Bereich der Rohrleitungen als auch beim umbauten Raum im Verteilerbereich und beim Verteiler selbst. Herkömmliche Verteiler können entfallen.

Bei Standardanlagen ist es ausreichend, nur den Volllast-Betriebspunkt einzuregulieren. Dazu werden mittels der Elektronikeinheit 15 die Sollwerte für die Förderhöhe der Pumpe 1 und die Drosselstellung der Stellarmatur 2 solange verstellt, bis der benötigte Fluidstrom pro Raum eingestellt ist, wobei die Elektronikeinheit 15 die notwendige Autorität der Stellarmatur 2 berücksichtigt. Der gesamte Einreguliervorgang kann automatisch ablaufen. Der Widerstand der Rohrmetzkomponenten ohne Stellarmatur wird aus dem in der Elektronik verfügbarem Wert der Förderhöhe und dem aus der Drosselstellung der Stellarmatur abgeleitetem Kv-Wert von der Elektronikeinheit errechnet. Diese Methode ist wesentlich genauer als die bisher üblichen Vorausberechnungen. Aus den Einstelldaten des Volllast-Betriebspunktes ermittelt die Elektronikeinheit 15 automatisch die Verstellgesetzmäßigkeit für die Sollwerte der Förderhöhe und die Drosselstellung der Stellarmatur für den gesamten Stellbereich.

Liste der Abkürzungen

| | |
|---|---|
| $a$ | = Autorität der Stellarmatur |
| $A$ | = Ein Punkt der Streckenkennlinie $S$ |
| $B$ | = Betriebspunktekurve der hydraulischen Anlage |
| $C$ | = der zur Regelgröße $R_A$ gehörige Punkt der Verbraucherkennlinie $V$ |
| $D$ | = Durchflußkennlinie der hydraulischen Anlage |
| $E$ | = der aus dem Fluidstrom $Q_A$ und dem Stellsignal $Y_A$ sich ergebende Punkt der Durchflußkennlinie $D$ |
| $G$ | = Grundkennlinie der Stellarmatur |
| $H$ | = Drosselstellung der Stellarmatur (bei einem Stellventil der Hub) |
| $H_{soll}$ | = Sollwert der Drosselstellung der Stellarmatur |
| $Hz$ | = Drosselstellung der Stellarmatur beim Stellsignal $Y_{100}$, Fluidstrom $Q_{100}$ und Förderhöhe der Pumpe $Pz$ |
| $H_{100}$ | = Drosselstellung der Stellarmatur im voll geöffneten Zustand |
| $I$ | = der zu Punkt $E$ der Durchflußkennlinie $D$ gehörige Punkt der Betriebspunktekurve $B$ |
| $K$ | = Zylinderfläche senkrecht zur $Q$ - $Y$ -Ebene, deren Schnitt mit der $Q$ - $Y$ -Ebene die Durchflußkennlinie $D$ ergibt |
| $kv$ | = $kv$ -Wert der Stellarmatur |
| $kv_A$ | = $kv$-Wert der Stellarmatur beim Stellsignal $Y_A$ |
| $kv_S$ | = $kv$-Wert der Stellarmatur in voller Offenstellung (Serien $kv_s$ -Wert) |
| $kv_Z$ | = $kv$-Wert der Stellarmatur bei der Drosselstellung $Hz$ |
| $L$ | = Zylinderfläche senkrecht zur $P$ - $Q$ -Ebene, deren Schnitt mit der $P$ - $Q$ -Ebene die Förderhöhenkennlinie |

$P_{soll}$ ergibt.

| | |
|---|---|
| $M$ | = der zu Punkt $I$ der Betriebspunktekurve $B$ gehörige Punkt der Förderhöhenkennlinie $P_{soll}$ |
| $N$ | = der zum Stellsignal $Y_A$ und zur Drosselstellung $H_A$ gehörige Punkt der Verstellgesetzmäßigkeit der Drosselstellung der Stellarmatur $H_{soll} = f(Y)$ |
| $O$ | = der zum Stellsignal $Y_A$ und zum $kv$-Wert $kv_A$ gehörige Punkt der Kennlinie $kv = f(Y)$ |
| $P$ | = Förderhöhe der Pumpe |
| $P_E$ | = Förderhöhe der Pumpe beim Fluidstrom $Q_A$ |
| $P_{max}$ | = maximale Förderhöhe der Pumpe in Abhängigkeit vom Förderstrom $Q$ |
| $P_{min}$ | = minimale Förderhöhe der Pumpe in Abhängigkeit vom Förderstrom $Q$ |
| $P_{soll}$ | = Sollwert der Förderhöhe der Pumpe in Abhängigkeit von Fluidstrom $Q$. |
| $P_z$ | = Förderhöhe der Pumpe beim Fluidstrom $Q_{100}$ und beim Stellsignal $Y_{100}$ |
| $p_1 + p_2$ = | Widerstand des Rohrnetzes |
| $p_1$ | = Widerstand der Stellarmatur |
| $p_2$ | = Widerstand der Rohrleitungskomponenten ohne Stellarmatur |
| $p_1E$ | = Widerstand der Stellarmatur bei der zum Stellsignal $Y_A$ gehörigen Drosselstellung $H_A$ der Stellarmatur und dem Fluidstrom $Q_A$ |
| $p_2E$ | = Widerstand der Rohrleitungskomponenten ohne Stellarmatur beim Fluidstrom $Q_A$ |
| $p_1Z$ | = Widerstand der Stellarmatur bei der Drosselstellung $Hz$ der Stellarmatur und beim Fluidstrom $Q_{100}$ |
| $p_2z$ | = Widerstand der Rohrleitungskomponenten ohne Stellarmatur beim Fluidstrom $Q_{100}$ |
| $Q$ | = Fluidstrom der hydraulischen Anlage |
| $Q_A$ | = der zur Regelgröße $R_A$ gehörige Punkt des Fluidstromes $Q$ |
| $Q_{min}$ | = Minimalwert des Fluidstromes $Q$ |
| $Q_{100}$ | = maximaler Fluidstrom der hydraulischen Anlage |
| $R$ | = Regelgröße der hydraulischen Anlage |
| $R_A$ | = Regelgröße im Punkt $A$ der Streckenkennlinie $S$ |
| $R_{100}$ | = Regelgröße beim Fluidstrom $Q_{100}$ |
| $S$ | = Streckenkennlinie der hydraulischen Anlage |
| $T$ | = Fläche des Widerstandes $p_1 + p_2$ |
| $Tv$ | = Vorlauftemperatur |
| $T_R$ | = Raumtemperatur |
| $V$ | = Verbraucherkennlinie |
| $W$ | = Wärmeleistung |
| $w$ | = Strömungsgeschwindigkeit in der Rohrleitungskomponente |
| $Y$ | = Stellsignal des Anlagenreglers |
| $Y_A$ | = Stellsignal bei der Regelgröße $R_A$ |
| $Y_{100}$ | = Stellsignal bei der Regelgröße $R_{100}$ |
| $Z$ | = Volllast-Betriebspunkt beim Fluidstrom $Q_{100}$, Stellsignal $Y_{100}$ und Förderhöhe der Pumpe $Pz$ |
| $\rho$ | = Dichte des Fluids |
| $\zeta$ | = Widerstandsbeiwert einer Rohrleitungskomponente (=zeta-Wert) |

Bezugszeichen

| | |
|---|---|
| 1 | Pumpenaggregat |
| 2 | Stellarmatur |
| 3 | Stellantrieb |
| 4 | Regelelektronik |
| 5 | Rückführung |
| 6 | Raum, Verbraucher |
| 7 | Vorlaufverteiler |
| 8 | Vorlaufleitung |
| 9 | Rücklaufleitung |
| 10 | Rücklaufsammler |
| 11 | Wärmetauscher |
| 12 | Leitung |
| 13 | Anlagenregler |
| 14 | Signalleitung |

15 Elektronikeinheit
16 Signalleitung
17 Signalleitung
18 Sensor
19 Sensor
20 Signalleitung
21 Signalleitung
22 Pumpenregelung
23 Fluidstrommeßgerät
24 Beimischleitung
25 Armatur
26 Pumpen-Stellarmaturen-Einheit

**Patentansprüche**

1. Verfahren zur Beeinflussung eines Fluidstromes in einer mit einem Verbraucher versehenen hydraulischen Anlage, wobei mindestens eine in der Anlage angeordnete, in Förderhöhe und/oder Fördermenge veränderbare Pumpe ein Fluid unter Überwindung des Rohmetzwiderstandes umwälzt und eine in der hydraulischen Anlage angeordnete Stellarmatur die Transportleistung des Fluids verändert, **dadurch gekennzeichnet, daß** mit einer als permanenter oder temporärer Bestandteil der hydraulischen Anlage ausgebildeten Elektronikeinheit (15) aus einer erwünschten Streckenkennlinie *(S)* und der Verbraucherkennlinie *(V)* eine zugehörige Anlagen-Durchflusskennlinie *(D)* ermittelt wird und dass mit der Anlagen-Durchflußkennlinie (*D*), gebildet aus Wertepaaren von Anlagen-Fluidstrom (*Q*) und Stellsignal (*Y*) eines Anlagenreglers (13), oder gebildet aus Wertepaaren von Anlagen-Fluidstrom (*Q*) und Drosselstellung (*H*) der Stellarmatur (2), die Elektronikeinheit (15), eine Pumpenregelung (22) oder eine Regelelektronik (4) für jedes Wertepaar der Anlagen-Durchflusskennlinie *(D)* die Förderhöhe *(P)* der Pumpe (1) und den Rohmetzwiderstand ($p_1 + p_2$) auf einen gleichen Wert einstellt oder einregelt.

2. Verfahren nach Anspruch 1, **dadurch gekennzeichnet, daß** durch die Elektronikeinheit (15) ein Regler von mindestens einer in der Anlage angeordneten Pumpe (1) und ein Stellantrieb (2) von einer in der Anlage angeordneten Stellarmatur (3) zu einer regelungstechnischen und/oder steuerungstechnischen Stelleinheit verbunden sind.

3. Verfahren nach Anspruch 1 oder 2, **dadurch gekennzeichnet, daß** der Rohmetzwiderstand durch Veränderung der Drosselstellung einer Stellarmatur (3) eingestellt bzw. eingeregelt wird.

4. Verfahren nach einem der Ansprüche 1 - 3, **dadurch gekennzeichnet, daß** die Veränderung der Förderhöhe und/oder Fördermenge der Pumpe (1) durch Drehzahlveränderung und/oder durch eine Leitschaufelverstellung erfolgt.

5. Verfahren nach einem der Ansprüche 1 - 4, **dadurch gekennzeichnet, daß** bei einer Drehzahlveränderung, Leitschaufel- und/oder Laufschaufelverstellung die Förderhöhe der Pumpe (1) die Regelgröße ist.

6. Verfahren nach Anspruch 4 oder 5, **dadurch gekennzeichnet, daß** die Förderhöhenregelung der Pumpe (1) nach dem Prinzip einer konstanten Förderhöhe bei vorgegebenen Sollwert arbeitet.

7. Verfahren nach einem der Ansprüche 1 - 6, **dadurch gekennzeichnet, daß** das Stellsignal (*Y*) des Anlagenreglers oder -steuergerätes, das Signal der Förderhöhe der Pumpe (1) und das Fluidstromsignal in die Elektronikeinheit (15) permanent eingeleitet werden und die Elektronikeinheit (15) die Sollwerte für die Förderhöhe der Pumpe und die Drosselstellung der Stellarmatur (2) permanent ausgibt.

8. Verfahren nach einem der Ansprüche 1 - 7, **dadurch gekennzeichnet, daß** das Stellsignal des Anlagenreglers (13) oder -steuergerätes permanent und das Signal für die Förderhöhe der Pumpe (1) und das Fluidstromsignal im Rahmen der Einregulierung der Anlage in die Elektronikeinheit (15) eingeleitet werden und die Elektronikeinheit (15) die Sollwerte für die Förderhöhe der Pumpe (1) und die Drosselstellung der Stellarmatur (2) permanent ausgibt.

9. Verfahren nach einem der Ansprüche 1 - 8, **dadurch gekennzeichnet, daß** das Signal für die Förderhöhe der Pumpe (1) und das Fluidstromsignal im Rahmen der Einregulierung der Anlage in die Elektronikeinheit (15) eingegeben werden, daß die Elektronikeinheit (15) die Sollwerte für die Förderhöhe der Pumpe (1) und die Drosselstellung der Stellarmatur (2) in Abhängigkeit vom Stellsignal (*Y*) des (1) und die Drosselstellung der Stellarmatur (2) in Abhängigkeit vom Stellsignal (*Y*) des Anlagenreglers (13) oder -steuergerätes ermittelt und daß diese Werte im Regler der Pumpe bzw. im Stellantrieb der Stellarmatur gespeichert und beim Betrieb der Anlage permanent ausgegeben werden, wobei das Stellsignal des Anlagenreglers (13) oder -steuergerätes sowohl in den Regler der Pumpe, als auch in den Stellantrieb permanent eingeleitet wird.

10. Verfahren nach einem der Ansprüche 1-9, **dadurch gekennzeichnet, daß** in die Elektronikeinheit (15) eine aus pumpen- und anlagentechnischer Sicht minimal mögliche Förderhöhe der Pumpe (1) in Abhängigkeit vom Fluidstrom vorgewählt wird und daß die Elektronikeinheit (15) die zugehörige Stellarmaturenkennlinie unter Einbeziehung der minimal und maximal zulässigen Kennlinienverläufe der Stellarmatur (2) ermittelt.

11. Verfahren nach einem der Ansprüche 1 - 10, **dadurch gekennzeichnet, daß** eine aus stellarmaturen- und anlagentechnischer Sicht günstige Stellarmaturenkennlinie vorgewählt wird und daß die Elektronikeinheit (15) die zugehörige Förderhöhe der Pumpe (1) in Abhängigkeit vom Fluidstrom unter Einbeziehung der pumpentechnischen Möglichkeiten ermittelt.

12. Verfahren nach einem der Ansprüche 1-11, **dadurch gekennzeichnet, daß** in der Elektronikeinheit (15) eine Vielzahl anlagentechnisch relevanter Strecken- (*S*) und Verbraucherkennlinien *(V)* abgelegt sind und anlagenspezifisch ausgewählt bzw. modifiziert werden.

13. Verfahren nach einem der Ansprüche 1-12, **dadurch gekennzeichnet, daß** in der Elektronikeinheit (15) eine Vielzahl pumpentechnisch relevanter Förderhöhenkennlinien abgelegt sind und pumpenspezifisch ausgewählt bzw. modifiziert werden.

14. Verfahren nach einen der Ansprüche 1-13, **dadurch gekennzeichnet, dass** in des Elektronikeinheit (15) eine Vielzahl armaturetechnisch relevantes Stellarmatur. kennlinien abgelegt sind und armaturenspezifisch ausgewählt bzw. modifiziert werden.

15. Verfahren nach einem der Ansprüche 1 -14, **dadurch gekennzeichnet, daß** in der Elektronikeinheit (15) eine Vielzahl technisch relevanter Durchflußkennlinien abgelegt sind und anlagenspezifisch ausgewählt bzw. modifiziert werden.

16. Verfahren nach einem der Ansprüche 1 - 15, **dadurch gekennzeichnet, daß** die Elektronikeinheit (15) die optimale Durchflußkennlinie *(D)* der hydraulischen Anlage nach dem im Prinzip bekannten normalaxonometrischen Verfahren ermittelt.

17. Verfahren nach einem der Ansprüche 1 - 16, **dadurch gekennzeichnet, daß** die optimale Durchflußkennlinie (*D*) als Funktion des Fluidstromes in Abhängigkeit vom Stellsignal (*Y*) des Anlagenreglers- oder Steuergerätes gebildet ist.

18. Verfahren nach einem der Ansprüche 1 - 17, **dadurch gekennzeichnet, daß** die optimale Durchflußkennlinie *(D)* extern gebildet und in die Elektronikeinheit (15) eingegeben wird.

19. Verfahren nach einem der Anspruch 1 - 18, **gekennzeichnet durch** eine beim Stillstand der Pumpe (1) geschlossene Stellarmatur (2).

20. Verfahren nach einem der Ansprüche 1 -19, **dadurch gekennzeichnet, daß** in der hydraulischen Anlage eine Beimischleitung (24) zwischen einer Vorlaufleitung (8) und einer Rücklaufleitung (9) angeordnet ist und daß in der Beimischleitung (24) eine Armatur (25) mit veränderbarem Widerstand angeordnet ist.

21. Verfahren nach Anspruch 20, **dadurch gekennzeichnet, daß** die Elektronikeinheit (15) mit einer linearisierten Streckenkennlinie (*S*) und daraus abgeleiteten Durchflußkennlinie *(D)* versehen ist.

22. Verfahren nach Anspruch 20 oder 21, **dadurch gekennzeichnet, daß** die Armatur (25) ein Rückflußverhinderer oder eine Stellarmatur ist.

23. Verfahren nach einem der Ansprüche 1 - 22 und zur Erzeugung optimaler Streckenkennlinien in hydraulischen Anlagen, **dadurch gekennzeichnet, daß** innerhalb einer Elektronikeinheit (15) aus der erwünschten optimalen Streckenkennlinie und der Verbraucherkennlinie die für die Anlage optimale Durchflußkennlinie ermittelt wird, daß die ermittelte optimale oder eine extern vorgegebene Durchflußkennlinie in der Anlage dadurch realisiert wird, daß die Elektronikeinheit (15) aus einer vorgewählten Förderhöhenkennlinie der Pumpe (1) die erforderlichen *kv*-Werte der Stellarmatur (2) oder aus einer vorgewählten Stellarmaturenkennlinie die erforderliche Förderhöhenkennlinie der Pumpe (1) nach dem Prinzip ermittelt, daß für jedes Wertepaar von Stellsignal des Anlagenreglers und Fluidstrom der Durchflußkennlinie die Förderhöhe der Pumpe (1) und der Rohrnetzwiderstand gleich sein müssen, daß aus den *kv*-Werten die Drosselstellungen der Stellarmatur (2) mit Hilfe der Grundkennlinie abgeleitet werden und daß die Elektronikeinheit (15) die einander zugeordneten Werte für die Förderhöhe der Pumpe (1) und die Drosselstellung der Stellarmatur (2) als Sollwerte in Abhängigkeit vom Stellsignal des Anlagenreglers an die Pumpenregelung bzw. den Stellantrieb der Stellarmatur (2) leitet.

**Claims**

1. Method for influencing a fluid stream in a hydraulic system provided with a consumer, at least one pump arranged in the system and of variable delivery head and/or delivery rate circulating a fluid, at the same time overcoming the pipe-network resistance, and an actuation fitting arranged in the hydraulic system varying the transport capacity of the fluid, **characterized in that**, by means of an electronic unit (15) designed as a permanent or temporary component of the hydraulic system, an associated system throughflow characteristic curve *(D)* is determined from a desired section characteristic curve *(S)* and the consumer characteristic curve *(V),* and **in that**, by means of the system throughflow characteristic curve *(D),* formed from pairs of values of the system fluid stream *(Q)* and actuating signal *(Y)* of a system controller (13) or formed from pairs of values of the system fluid stream *(Q)* and throttle position *(H)* of the actuation fitting (2), the electronic unit (15), a pump regulation (22) or regulating electronics (4) sets or regulates, for each pair of values of the system throughflow characteristic curve *(D),* the delivery head *(P)* of the pump (1) and the pipe-network resistance ($p_1 + p_2$) to an identical value.

2. Method according to Claim 1, **characterized in that**, by means of the electronic unit (15), a controller of at least one pump (1) arranged in the system and an actuating drive (2) of an actuation fitting (3) arranged in the system are connected to form a regulating and/or controlling actuation unit.

3. Method according to Claim 1 or 2, **characterized in that** the pipe-network resistance is set or regulated by means of a variation in the throttle position of an actuation fitting (3).

4. Method according to one of Claims 1-3, **characterized in that** the variation in the delivery head and/or delivery rate of the pump (1) takes place by means of a rotational-speed variation and/or by means of a guide-blade adjustment.

5. Method according to one of Claims 1-4, **characterized in that**, in the case of a rotational-speed variation, guide-blade adjustment and/or moving-blade adjustment, the delivery head of the pump (1) is the controlled variable.

6. Method according to Claim 4 or 5, **characterized in that** the delivery-head regulation of the pump (1) operates on the principle of a constant delivery head with a predetermined desired value.

7. Method according to one of Claims 1-6, **characterized in that** the actuating signal *(Y)* of the system controller or system control apparatus, the signal of the delivery head of the pump (1) and the fluid-stream signal are introduced permanently into the electronic unit (15), and the electronic unit (15) permanently outputs the desired values for the delivery head of the pump and the throttle position of the actuation fitting (2).

8. Method according to one of Claims 1-7, **characterized in that** the actuating signal of the system controller (13) or system control apparatus is introduced into the electronic unit (15) permanently and the signal for the delivery head of the pump (1) and the fluid-stream signal are introduced into the electronic unit (15) within the framework of the regulation of the system, and the electronic unit (15) permanently outputs the desired values for the delivery head of the pump (1) and the throttle position of the actuation fitting (2).

9. Method according to one of Claims 1-8, **characterized in that** the signal for the delivery head of the pump (1) and the fluid-stream signal are entered into the electronic unit (15) within the framework of the regulation of the system, **in that** the electronic unit (15) determines the desired values for the delivery head of the pump (1) and the throttle position of the actuation fitting (2) as a function of the actuating signal *(Y)* of the system controller (13) or system control apparatus, and **in that** these values are stored in the controller of the pump or in the actuating drive of the actuation fitting and are output permanently during the operation of the system, the actuating signal of the system controller (13) or system control apparatus being introduced permanently both into the control of the pump and into the actuating drive.

10. Method according to one of Claims 1-9, **characterized in that** a minimum possible delivery head of the pump (1) in terms of the pump and system is preselected in the electronic unit (15) as a function of the fluid stream, and **in that** electronic unit (15) determines the associated actuation-fitting characteristic curve, including the minimum and maximum permissible characteristic-curve profiles of the actuation fitting (2).

11. Method according to one of Claims 1-10, **characterized in that** an actuation-fitting characteristic curve which is favourable in terms of the actuation fitting and system is preselected, and **in that** the electronic unit (15) determines the associated delivery head of the pump (1) as a function of the fluid stream, including the pump-related possibilities.

12. Method according to one of Claims 1-11, **characterized in that** a multiplicity of section and consumer characteristic curves ($S$, $V$) relevant to the system are filed in the electronic unit (15) and are selected or modified specifically with regard to the system.

13. Method according to one of Claims 1-12, **characterized in that** a multiplicity of delivery-head characteristic curves relevant to the pump are filed in the electronic unit (15) and are selected or modified specifically with regard to the pump.

14. Method according to one of Claims 1-13, **characterized in that** a multiplicity of actuation-fitting characteristic curves relevant to the fitting are filed in the electronic unit (15) and are selected or modified specifically with regard to the fitting.

15. Method according to one of Claims 1-14, **characterized in that** a multiplicity of technically relevant throughflow characteristic curves are filed in the electronic unit (15) and are selected or modified specifically with regard to the system.

16. Method according to one of Claims 1-15, **characterized in that** the electronic unit (15) determines the optimum throughflow characteristic curve (D) of the hydraulic system according to the normal-axonometric method known in principle.

17. Method according to one of Claims 1-16, **characterized in that** the optimum throughflow characteristic curve *(D)* as a function of the fluid stream is formed as a function of the actuating signal *(Y)* of the system controller or system control apparatus.

18. Method according to one of Claims 1-17, **characterized in that** the optimum throughflow characteristic curve *(D)* is formed externally and is entered into the electronic unit (15).

19. Method according to one of Claims 1-18, **characterized by** an actuation fitting (2) which is closed when the pump (1) is at a standstill.

20. Method according to one of Claims 1-19, **characterized in that** an admixing line (24) is arranged in the hydraulic system between a forward line (8) and a return line (9), and **in that** a fitting (25) of variable resistance is arranged in the admixing line (24).

21. Method according to Claim 20, **characterized in that** the electronic unit (15) is provided with a linearized section characteristic curve ($S$) and a throughflow characteristic curve *(D)* derived from this.

22. Method according to Claim 20 or 21, **characterized in that** the fitting (25) is a non-return device or an actuation fitting.

23. Method according to one of Claims 1-22 and for generating optimum section characteristic curves in hydraulic systems, **characterized in that**, within an electronic unit (15), the optimum throughflow characteristic curve for the system is determined from the desired optimum section characteristic curve and the consumer characteristic curve, **in that** the determined optimum or an externally predetermined throughflow characteristic curve is implemented in the system **in that** the electronic unit (15) determines the required $k_v$ values of the actuation fitting (2) from a preselected delivery-head characteristic curve of the pump (1) or the required delivery-head characteristic curve of the pump (1) from a preselected actuation-fitting characteristic curve, according to the principle that, for each pair of values of the actuating signal of the system controller and the fluid stream of the throughflow characteristic curve, the delivery head of the pump (1) and the pipe-network resistance must be identical, **in that** the throttle positions of the actuation fitting (2) are derived from the $k_v$ values with the aid of the basic characteristic curve, and **in that** the electronic unit (15) conducts the mutually assigned values for the delivery head of the pump (1) and the throttle position of the actuation fitting (2) as desired values as a function of the actuating signal of the system controller to the pump regulation or the actuating drive of the actuation fitting (2).

**Revendications**

1. Procédé pour influencer un débit de fluide dans un équipement hydraulique muni d'une charge, au moins une pompe à hauteur de refoulement et/ou volume de refoulement variable disposée dans l'équipement faisant circuler un fluide en contrant une résistance de réseau de conduites et un robinet de réglage disposé dans l'équipement hydraulique modifiant la capacité de transport du fluide, **caractérisé en ce qu'**une courbe caractéristique correspondante de débit de l'équipement (D) est déterminée avec une unité électronique (15) réalisée sous la forme d'un composant permanent ou temporaire de l'équipement hydraulique à partir d'une courbe caractéristique de trajet souhaitée (S) et de la courbe caractéristique de la charge (V) et que l'unité électronique (15), un régulateur de pompe (22) ou un circuit électronique de régulation (4), à l'aide de la courbe caractéristique de débit de l'équipement (D), formée par des paires de valeurs du débit de fluide de l'équipement (Q) et du signal de commande (Y) d'un régulateur de l'équipement (13) ou formée par des paires de valeurs du débit de fluide de l'équipement (Q) et de la position de l'obturateur (H) du robinet de réglage (2), règle ou régule la hauteur de refoulement (P) de la pompe (1) et la résistance du réseau de conduites (p1 + p2) à une même valeur pour chaque paire de valeurs de la courbe caractéristique correspondante de débit de l'équipement (D).

2. Procédé selon la revendication 1, **caractérisé en ce qu'**un régulateur d'au moins une pompe (1) disposée dans l'équipement et un mécanisme de réglage (2) d'un robinet de réglage (3) disposé dans l'équipement sont reliés par l'unité électronique (15) pour former une unité de réglage de régulation et/ou de contrôle.

3. Procédé selon la revendication 1 ou 2, **caractérisé en ce que** la résistance du réseau de conduits est réglée ou régulée en modifiant la position de l'obturateur d'un robinet de réglage (3).

4. Procédé selon l'une des revendications 1 à 3, **caractérisé en ce que** la modification de la hauteur de refoulement et/ou du volume de refoulement de la pompe (1) s'effectue par une modification de la vitesse de rotation et/ou par un positionnement de l'aube directrice.

5. Procédé selon l'une des revendications 1 à 4, **caractérisé en ce que** lors d'une modification de la vitesse de rotation, d'un positionnement de l'aube directrice et/ou d'un positionnement de l'aube mobile, la grandeur de régulation et la hauteur de refoulement de la pompe (1).

6. Procédé selon la revendication 4 ou 5, **caractérisé en ce que** la régulateur de la hauteur de refoulement de la pompe (1) fonctionne selon le principe d'une hauteur de refoulement constante avec une valeur de consigne prédéfinie.

7. Procédé selon l'une des revendications 1 à 6, **caractérisé en ce que** le signal de réglage (Y) du régulateur ou de l'appareil de commande de l'équipement, le signal de la hauteur de refoulement de la pompe (1) et le signal du débit du fluide sont introduits en permanence dans l'unité électronique (15) et l'unité électronique (15) délivre en permanence les valeurs de consigne pour la hauteur de refoulement de la pompe et la position de l'obturateur du robinet de réglage (2).

8. Procédé selon l'une des revendications 1 à 7, **caractérisé en ce que** le signal de réglage du régulateur ou de l'appareil de commande de l'équipement (13) est introduit en permanence dans l'unité électronique (15) et le signal pour la hauteur de refoulement de la pompe (1) et le signal du débit de fluide sont introduits dans le cadre de la régulation de l'équipement et l'unité électronique (15) délivre en permanence les valeurs de consigne pour la hauteur de refoulement de la pompe (1) et la position de l'obturateur du robinet de réglage (2).

9. Procédé selon l'une des revendications 1 à 8, **caractérisé en ce que** le signal pour la hauteur de refoulement de la pompe (1) et le signal du débit de fluide sont introduits dans l'unité électronique (15) dans le cadre de la régulation de l'équipement, que l'unité électronique détermine les valeurs de consigne pour la hauteur de refoulement de la pompe (1) et la position de l'obturateur du robinet de réglage (2) en fonction du signal de réglage (Y) du régulateur ou de l'appareil de commande de l'équipement (13) et que ces valeurs sont enregistrées dans le régulateur de la pompe ou dans le mécanisme de réglage du robinet de réglage et sont délivrées en permanence lors du fonctionnement de l'équipement, le signal de réglage du régulateur ou de l'appareil de commande de l'équipement (13) étant introduit en permanence à la fois dans le régulateur de la pompe et dans le mécanisme de réglage.

**10.** Procédé selon l'une des revendications 1 à 9, **caractérisé en ce qu'**une hauteur de refoulement minimale de la pompe (1) du point de vue de la technique de la pompe et de l'équipement est présélectionnée dans l'unité électronique (15) en fonction du débit du fluide et que l'unité électronique (15) détermine la courbe caractéristique correspondante du robinet de réglage en utilisant le tracé minimum et maximum autorisé de la courbe du robinet de réglage (2).

**11.** Procédé selon l'une des revendications 1 à 10, **caractérisé en ce qu'**une courbe caractéristique du robinet de réglage favorable du point de vue de la technique du robinet de réglage et de l'équipement est présélectionnée et que l'unité électronique (15) détermine la hauteur de refoulement correspondante de la pompe (1) en fonction du débit du fluide en utilisant les possibilités techniques de la pompe.

**12.** Procédé selon l'une des revendications 1 à 11, **caractérisé en ce qu'**un grand nombre de courbes caractéristiques pertinentes du trajet (S) et de la charge (V) sont stockées dans l'unité électronique (15) et sont sélectionnées ou modifiées spécifiquement en fonction de l'équipement.

**13.** Procédé selon l'une des revendications 1 à 12, **caractérisé en ce qu'**un grand nombre de courbes caractéristiques pertinentes de hauteur de refoulement pour la technique de la pompe sont stockées dans l'unité électronique (15) et sont sélectionnées ou modifiées spécifiquement en fonction de la pompe.

**14.** Procédé selon l'une des revendications 1 à 13, **caractérisé en ce qu'**un grand nombre de courbes caractéristiques de robinet de réglage pertinentes pour la technique du robinet sont stockées dans l'unité électronique (15) et sont sélectionnées ou modifiées spécifiquement en fonction du robinet.

**15.** Procédé selon l'une des revendications 1 à 14, **caractérisé en ce qu'**un grand nombre de courbes caractéristiques de débit pertinentes pour la technique sont stockées dans l'unité électronique (15) et sont sélectionnées ou modifiées spécifiquement en fonction de l'équipement.

**16.** Procédé selon l'une des revendications 1 à 15, **caractérisé en ce que** l'unité électronique (15) détermine la courbe de débit optimale (D) de l'équipement hydraulique d'après le procédé axonométrique normal connu dans son principe.

**17.** Procédé selon l'une des revendications 1 à 16, **caractérisé en ce que** la courbe de débit optimale (D) est calculée sous la forme d'une fonction du débit du fluide dépendant du signal de réglage (Y) du régulateur ou de l'appareil de commande de l'équipement.

**18.** Procédé selon l'une des revendications 1 à 17, **caractérisé en ce que** la courbe de débit optimale (D) est calculée à l'extérieur puis introduite dans l'unité électronique (15).

**19.** Procédé selon l'une des revendications 1 à 18, **caractérisé par** un robinet de réglage (2) fermé lors de l'arrêt de la pompe (1).

**20.** Procédé selon l'une des revendications 1 à 19, **caractérisé en ce qu'**une conduite de mélange (24) est disposée dans l'équipement hydraulique entre une conduite d'aller (8) et une conduite de retour (9) et qu'un robinet (25) à résistance variable est disposé dans la conduite de mélange (24).

**21.** Procédé selon la revendication 20, **caractérisé en ce que** l'unité électronique (15) est dotée d'un courbe caractéristique de trajet (S) linéarisée et d'une courbe caractéristique de débit (D) qui en est dérivée.

**22.** Procédé selon la revendication 20 ou 21, **caractérisé en ce que** le robinet (25) est un clapet anti-retour ou un robinet de réglage.

**23.** Procédé selon l'une des revendications 1 à 22 et destiné à générer des courbes caractéristiques de réglage optimales dans les équipements hydrauliques, **caractérisé en ce que** la courbe caractéristique de débit optimale pour l'équipement est déterminée à l'intérieur d'une unité électronique (15) à partir de la courbe caractéristique de réglage optimale souhaitée et de la courbe caractéristique de la charge, que la courbe caractéristique de débit optimale déterminée ou prédéfinie de façon externe est réalisée dans l'équipement **en ce que** l'unité électronique (15) détermine les valeurs kv nécessaires du robinet de réglage (2) à partir d'une courbe caractéristique de refoulement présélectionnée de la pompe (1) ou la courbe caractéristique de refoulement nécessaire de la pompe (1) à partir d'une courbe caractéristique présélectionnée du robinet de réglage d'après le principe selon lequel la hauteur de refoulement de la pompe (1) et la résistance du réseau de conduites doivent être égales pour chaque paire de valeurs du signal de réglage du régulateur de l'équipement et du débit du fluide de la courbe caractéristique de débit, que les positions de l'obturateur du robinet de réglage (2) sont dérivées à partir des valeurs kv à l'aide de la courbe caractéristique de base et que l'unité électronique (15) achemine les valeurs associées les unes aux autres pour la hauteur de refoulement de la pompe (1) et la position de l'obturateur du robinet de réglage (2) sous la forme de valeurs de consigne en fonction du signal de réglage du régulateur de l'équipement au régulateur de la pompe ou au mécanisme de réglage du robinet de réglage (2).

# Fig. 1

Fig. 2

$H_{soll} = f(Y)$

$P_{soll} = f(Y)$

# Fig. 3

D = f ( Y , Q )

Kv = f ( Y )

15

Fig. 4

Fig. 5

Fig. 6

Fig. 7

Fig. 8

Fig. 9

Fig. 10

Fig. 11

Fig. 12

Fig. 13

Fig. 14